# EUROPEAN PATENT SPECIFICATION

(11) **EP 3 745 268 B1**
(45) Date of publication and mention of the grant of the patent: **02.08.2023**
(21) Application number: 20177302.5
(22) Date of filing: 29.05.2020
(51) Int. Cl.: G06F 11/14

(54) **FUNCTIONAL SAFETY IN GRAPHICS PROCESSING SYSTEMS**
FUNKTIONSSICHERHEIT IN GRAFIKVERARBEITUNGSSYSTEMEN
SÉCURITÉ FONCTIONNELLE DANS LES SYSTÈMES DE TRAITEMENT GRAPHIQUE

(30) Priority: 30.05.2019 GB 201907697
(43) Date of publication of application: 02.12.2020
(73) Proprietor: Imagination Technologies Limited, Kings Langley Hertfordshire WD4 8LZ (GB)
(72) Inventor: SOPENA NOVALES, Mario, Kings Langley, Hertfordshire WD4 8LZ (GB); KING, Ian, Kings Langley, Hertfordshire WD4 8LZ (GB); SHAO, Wei, Kings Langley, Hertfordshire WD4 8LZ (GB); MORRIS, Phil, Kings Langley, Hertfordshire WD4 8LZ (GB); MCNAMARA, Damien, Kings Langley, Hertfordshire WD4 8LZ (GB); BROOME, Jamie, Kings Langley, Hertfordshire WD4 8LZ (GB)
(74) Representative: Slingsby Partners LLP

(56) References cited:
- US-A1- 2017 069 132
- US-A1- 2019 139 263
- US-B2- 9 836 808

## Description

### BACKGROUND

The present disclosure relates to methods and graphics processing systems for performing tile-based rendering.

In safety-critical systems, at least some of the components of the system must meet safety goals sufficient to enable the system as a whole to meet a level of safety deemed necessary for the system. For example, in most jurisdictions, seat belt retractors in vehicles must meet specific safety standards in order for a vehicle provided with such devices to pass safety tests. Likewise, vehicle tyres must meet specific standards in order for a vehicle equipped with such tyres to pass the safety tests appropriate to a particular jurisdiction. Safety-critical systems are typically those systems whose failure would cause a significant increase in the risk to the safety of people or the environment.

Data processing devices often form an integral part of safety-critical systems, either as dedicated hardware or as processors for running safety-critical software. For example, fly-by-wire systems for aircraft, driver assistance systems, railway signalling systems and control systems for medical devices would typically all be safety-critical systems running on data processing devices. Where data processing devices form an integral part of a safety-critical system it is necessary for the data processing device itself to satisfy safety goals such that the system as a whole can meet the appropriate safety level. In the automotive industry, the safety level is normally an Automotive Safety Integrity Level (ASIL) as defined in the functional safety standard ISO 26262.

Increasingly, data processing devices for safety-critical systems comprise a processor running software. Both the hardware and software elements must meet specific safety goals. Some software failures can be systematic failures due to programming errors or poor error handling. These issues can typically be addressed through rigorous development practices, code auditing and testing protocols. Even if systematic errors could be completely excluded from a safety-critical system, random errors can be introduced into hardware, e.g. by transient events (e.g. due to ionizing radiation, voltage spikes, or electromagnetic pulses). In binary systems transient events can cause random bit-flipping in memories and along the data paths of a processor. The hardware may also have permanent faults.

The safety goals for a data processing device may be expressed as a set of metrics, such as a maximum number of failures in a given period of time (often expressed as Failures in Time, or FIT), and the effectiveness of mechanisms for detecting single point failures (Single Point Failure Mechanisms, or SPFM) and latent failures (Latent Failure Mechanisms, or LFM). There are various approaches to achieving safety goals set for data processing devices: for example, by providing hardware redundancy so that if one component fails another is available to perform the same task, or through the use of check data (e.g. parity bits or error-correcting codes) to allow the hardware to detect and/or correct for minor data corruptions.

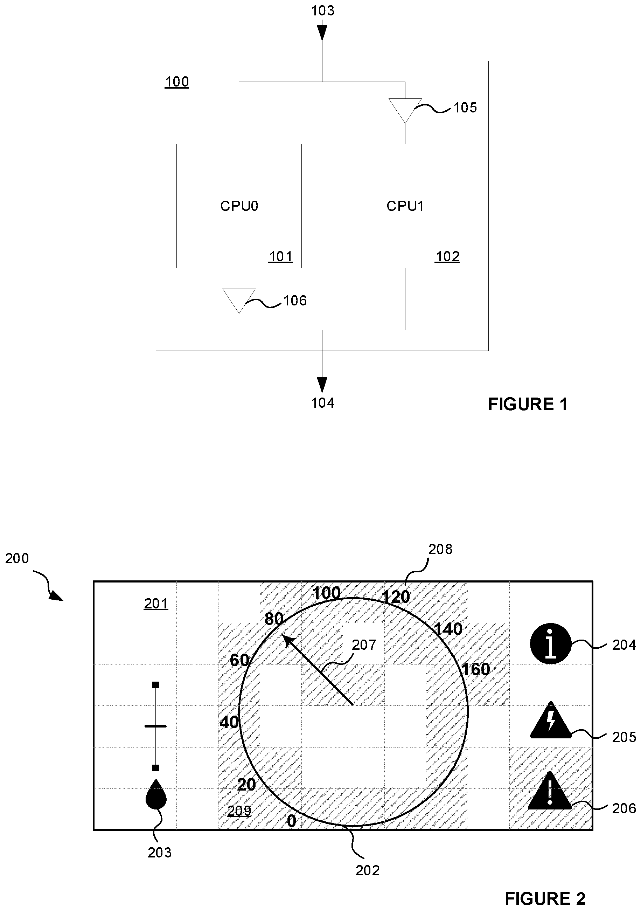

For example, data processors can be provided in a dual lockstep arrangement 100 as shown in Figure 1 in which a pair of identical processing cores 101 and 102 are configured to process a stream of instructions 103 in parallel. The output of either one of the processing cores (101) may be used as the output 104 of the lockstep processor. When the outputs of the processing cores 101 and 102 do not match, a fault can be raised to the safety-critical system. A delay 105 can be introduced on the input to one of the cores so as to improve the detection probability of errors induced by extrinsic factors such as ionizing radiation and voltage spikes (with typically a corresponding delay 106 being provided on the output of the other core). However, since a second processing core is required, dual lockstep processors are expensive in that they necessarily consume double the chip area compared to conventional processors and consume approximately twice the power.

Advanced driver-assistance systems and autonomous vehicles may incorporate data processing systems that are suitable for such safety-critical applications which have significant graphics and/or vector processing capability, but the increases in the area and power consumption (and therefore cost) of implementing a dual lockstep processor might not be acceptable or desirable. For example, driver-assistance systems often provide computer-generated graphics illustrating hazards, lane position, and other information to the driver. Typically this will lead the vehicle manufacturer to replace a conventional instrument cluster with a computer-generated instrument cluster which also means that the display of safety-critical information such as speed and vehicle fault information becomes computer-generated. Such processing demands can be met by graphics processing units (GPUs). However, in the automotive context, advanced driver-assistance systems typically require a data processing system which meets ASIL level B of ISO 26262.

Autonomous vehicles must in addition process very large amounts of data (e.g. from RADAR, LIDAR, map data and vehicle information) in real-time in order to make safety-critical decisions. Graphics processing units can also help meet such processing demands but safety-critical systems in autonomous vehicles are typically required to meet the most stringent ASIL level D of ISO 26262.

US 9836808 B2 describes apparatus and a method for verifying the integrity of image data comprising mapped texture data. US 2019/139263 A1 describes techniques which include processing data to produce first and second images according to two different memory access patterns. These images are compared, and an interrupt is generated if the comparison determines that the first image is different to the second image.

### SUMMARY

This summary is provided to introduce a selection of concepts that are further described below in the detailed description. This summary is not intended to identify key features or essential features of the claimed subject matter, nor is it intended to be used to limit the scope of the claimed subject matter.

There is provided a graphics processing system configured to use a rendering space which is subdivided into a plurality of tiles to render a scene that includes safety-critical elements of geometry, the graphics processing system being configured to:
receive elements of geometry of the scene to be rendered, one or more of the elements of geometry being a safety-critical element of geometry;
process elements of geometry, in a geometry processing phase, so as to form, for each tile of the rendering space, a respective tile list indicating the elements of geometry included in that tile; and
for each of a plurality of the tiles, process elements of geometry in the tile, in a fragment processing phase, so as to generate a respective fragment-processed output;
wherein the graphics processing system comprises a controller configured to:
   cause a set of one or more safety-critical elements of geometry to be processed in the geometry processing phase;
   identify as protected tiles one or more tiles for which the corresponding one or more tile lists are modified due to processing the set of one or more safety-critical elements of geometry in the geometry processing phase;
   cause each of the protected tiles to be processed first and second times in the fragment processing phase so as to, respectively, generate first and second fragment-processed outputs; and
   raise a fault signal if the first and second fragment-processed outputs of a protected tile do not match.

The controller may be configured to cause one or more tiles which are not identified as protected tiles to be processed a single time in the fragment processing phase.

The graphics processing system may further comprise a check unit operable to form a signature characteristic of a fragment-processed output, wherein the controller is configured to:
cause the check unit to form first and second signatures for the first and second fragment-processed outputs of a protected tile, respectively; and
compare the first and second signatures so as to determine whether the first and second fragment-processed outputs of the protected tile match.

The controller may be configured to cause the check unit to form the first signature in respect of one or more first fragment-processed outputs and to form the second signature in respect of one or more second fragment-processed outputs.

The first and second signatures may be each accumulated over a plurality of fragment-processed outputs directed to the check unit by the controller.

Each first and second fragment-processed output may represent a write to one or more buffers at a data store.

The controller may be configured to determine which of the tile lists are modified due to processing the set of one or more safety-critical elements of geometry in the geometry processing phase by comparing the tile lists before and after processing the set of one or more safety-critical elements of geometry in the geometry processing phase.

The graphics processing system may be configured to maintain state information for each of the tile lists and the controller is configured to compare the state information so as to determine which of the tile lists are modified due to processing the set of one or more safety-critical elements of geometry in the geometry processing phase.

The controller may be configured to prevent the graphics processing system from releasing memory allocated to the protected tiles during fragment processing for the first time so as to maintain the protected tiles in memory for fragment processing for the second time.

The controller may be configured to cause the graphics processing system to process elements of geometry in the geometry processing phase first and second times for the scene to be rendered so as to, respectively, generate first and second geometry-processed outputs, and to compare the first and second geometry-processed outputs and raise a fault signal if the first and second geometry-processed outputs do not match.

The controller may be configured to direct geometry-processed outputs to a check unit, wherein the check unit is configured to form one or more first geometry signatures which are characteristic of the first geometry-processed output, and to form one or more second geometry signatures which are characteristic of the second geometry-processed output, the controller being configured to perform the comparison of the first and second geometry-processed outputs by comparing the respective first and second geometry signatures.

Each fragment-processed output may correspond to a single protected tile such that the fault signal identifies which protected tile caused the fault, and the controller is configured to cause that protected tile to be resubmitted for fragment processing at the graphics processing system.

The graphics processing system may be configured to maintain signatures formed in respect of the tiles of one or more previous renders, and the graphics processing system is configured to, if the first and/or second signatures formed for a protected tile match a signature of the corresponding tile of the one or more previous frames, not write out the fragment-processed output for that protected tile to a memory accessible over a data bus and instead use the fragment-processed output of that previous frame as the rendered output of the protected tile.

There is provided a method of performing tile-based rendering of a scene that includes safety-critical elements of geometry using a rendering space which is subdivided into a plurality of tiles, the method comprising:
receiving elements of geometry of the scene to be rendered, one or more of the elements of geometry being a safety-critical element of geometry;
processing elements of geometry in a geometry processing phase so as to form, for each tile of the rendering space, a respective tile list indicating the elements of geometry included in that tile, wherein a set of one or more safety-critical elements of geometry are processed in the geometry processing phase;
identifying as protected tiles one or more tiles for which the corresponding one or more tile lists are modified due to processing the set of one or more safety-critical elements of geometry in the geometry processing phase;
for each of a plurality of the tiles, processing elements of geometry in the tile in a fragment processing phase so as to generate a respective fragment-processed output, wherein each of the protected tiles is processed first and second times in the fragment processing phase so as to, respectively, generate first and second fragment-processed outputs; and
raising a fault signal if the first and second fragment-processed outputs of a protected tile do not match.

The graphics processing system and/or graphics processing unit may be embodied in hardware on an integrated circuit. There may be provided a method of manufacturing, at an integrated circuit manufacturing system, the graphics processing system and/or graphics processing unit. There may be provided an integrated circuit definition dataset that, when processed in an integrated circuit manufacturing system, configures the system to manufacture the graphics processing system and/or graphics processing unit. There may be provided a non-transitory computer readable storage medium having stored thereon a computer readable description of an integrated circuit that, when processed in an integrated circuit manufacturing system, causes the integrated circuit manufacturing system to manufacture the graphics processing system and/or graphics processing unit.

There may be provided an integrated circuit manufacturing system comprising: a non-transitory computer readable storage medium having stored thereon a computer readable integrated circuit description that describes the graphics processing system and/or graphics processing unit; a layout processing system configured to process the integrated circuit description so as to generate a circuit layout description of an integrated circuit embodying the graphics processing system and/or graphics processing unit; and an integrated circuit generation system configured to manufacture the graphics processing system and/or graphics processing unit according to the circuit layout description.

There may be provided computer program code for performing a method as described herein. There may be provided non-transitory computer readable storage medium having stored thereon computer readable instructions that, when executed at a computer system, cause the computer system to perform the methods as described herein.

### BRIEF DESCRIPTION OF THE DRAWINGS

The present invention is described by way of example with reference to the accompanying drawings. In the drawings:
Figure 1 shows a conventional dual lockstep processor.
Figure 2 shows a computer-generated instrument cluster for a vehicle.
Figure 3 shows a graphics processing device for operation in accordance with the principles described herein.
Figure 4 is a flowchart illustrating the rendering of protected tiles in accordance with the principles described herein.
Figure 5 shows a data processing system supporting a graphics processing system configured in accordance with the principles described herein.
Figure 6 illustrates a sequence of instructions for performing redundant geometry processing in accordance with the principles described herein.
Figure 7 illustrates a sequence of instructions for performing redundant fragment processing in accordance with the principles described herein
Figure 8 is a schematic diagram of an integrated circuit manufacturing system.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.

The present disclosure relates to a graphics processing system comprising one or more processing units for performing tile-based rendering of a scene. A graphics processing system configured in accordance with the principles herein may have any tile-based architecture - for example, the system could be operable to perform tile based deferred rendering. Each processing unit may be able to process a tile independently of any other processing unit and independently of any other tile. The processing units may be, for example, any kind of graphical and/or vector and/or stream processing units. Each processing unit may comprise a rendering pipeline for performing geometry processing and/or fragment processing of primitives of a scene. Each processing unit may be a different physical core of a GPU.

A graphics processing system may comprise hardware components (e.g. hardware processing units provided at a graphics processing device, such as a GPU) and software components (e.g. the firmware, and the procedures and tasks for execution at the hardware processing units of a graphics processing device, such as a GPU). A graphics processing system may comprise a software driver for the hardware components (e.g. a driver for a GPU). A software driver may be supported at a data processing system comprising the graphics processing system. A software driver may provide an interface to the hardware components for software applications running at the data processing system.

Tile-based rendering systems use a rendering space which is subdivided into a plurality of tiles. As is known in the art, tiles can be any suitable shape and size, e.g. rectangular (including square) or hexagonal. A tile of the rendering space may relate to a portion of a render target, e.g. representing a frame which is to be rendered at a graphics processing system. A frame may be all or part of an image or video frame. In some examples, the render output is not a final image to be displayed, but instead may represent something else, e.g. a texture which can subsequently be applied to a surface when rendering an image which includes that texture. In the examples described below, the render output is a frame representing an image to be displayed, but it is to be understood that in other examples, the render output can represent other surfaces, such as textures or environment maps, etc.

Tile-based rendering systems generally perform two distinct phases of operation: (i) a geometry processing phase in which geometry (e.g. primitives) is processed to determine, for each tile of the rendering space, which items of geometry may be relevant for rendering that tile (e.g. which primitives at least partially overlap the tile), and (ii) a rendering phase (or "fragment processing phase") in which geometry relevant for rendering a particular tile is processed so as to render the tile - for example, to produce pixel values for the pixel positions in the tile, which can then be output from the rendering system, e.g. for storage in a buffer (such as a frame buffer) and/or for display. Processing geometry relevant to a tile may comprise, for example, generating primitive fragments by sampling the primitives at the sample positions of the tile, and determining which of the fragments are visible and determining how the fragments affect the appearance of the pixels. There may be a one-to-one relationship between the sample positions and the pixels. Alternatively, more than one sample position may relate to each pixel position, such that the final pixel values can be produced by combining rendered values determined for a plurality of sample positions. This can be useful for implementing anti-aliasing.

A processing unit may be configured to perform part or all of any aspect of graphics processing in the geometry processing phase and in the rendering phase, including, for example, tiling, geometry processing, texture mapping, shading, depth processing, vertex processing, tile acceleration, clipping, culling, primitive assembly, colour processing, stencil processing, anti-aliasing, ray tracing, pixelization and tessellation. Different processing units may be configured to perform different aspects of rendering. In some examples, all of the processing units may be identical.

In general, a fragment processing engine includes those parts of a graphics processing system which are arranged to collectively or individually perform fragment processing, i.e. perform processing in the rendering phase. A fragment processing engine may comprise one or more functional units arranged in any manner as appropriate to the particular architecture of the graphics processing system. In general, a geometry engine includes those parts of a graphics processing system which are arranged to collectively or individually perform geometry processing, including tiling. A geometry engine may comprise one or more functional units arranged in any manner as appropriate to the particular architecture of the graphics processing system. Parts of a graphics processing system may be shared between its fragment processing engine and its geometry engine. The configuration of geometry units, tiling engines and processing units described herein and shown in the figures is provided by way of example and it will be appreciated that different configurations of the geometry units, tiling engines and processing units may be adopted in other architectures.

A graphics processing system configured in accordance with the principles described herein may be arranged to render any kind of scene. In some applications it is necessary to protect the rendering of a scene such that faults in the rendering process can be identified and suitable action taken. For example, in the automotive context, graphics processing systems may be used to render an instrument cluster for display at a dashboard display screen. The instrument cluster provides critical information to the driver, such as vehicle speed and details of any vehicle faults. It is important that such critical information is reliably presented to the driver and vehicle regulations would typically require that the critical information is rendered in a manner which satisfies a predefined safety level, such as ASIL B of the ISO 26262 standard. The instrument cluster may additionally provide non-critical information such as the time and which radio station is selected, and the rendering of this non-critical information is not required to meet a predefined safety standard.

Figure 2 illustrates an instrument cluster 200 for rendering at a graphics processing system which will be referred to in the examples described herein. The instrument cluster comprises a speedometer 202 in the form of a traditional dial having speed values 208 around the edge of the dial and a needle 207 whose angular orientation indicates the current speed of the vehicle. The instrument cluster further comprises an oil temperature gauge 203, an information icon 204 (e.g. indicating the selected radio station), a non-critical warning icon 205 (e.g. indicating a fault with the air conditioning system), and a critical warning icon 206 (e.g. indicating a serious engine problem).

Only the speedometer 202 and the critical warning icon 206 of the display elements are critical to the safety of the vehicle and its occupants. It may be necessary to render those display elements in a manner which satisfies a mandated safety level, such as ASIL B of the ISO 26262 standard. The oil temperature gauge 203, information icon 204 and non-critical warning icon 205 do not need to be rendered to that safety level. One or more of the display elements 202 to 208 and/or a background to the display elements may require three-dimensional rendering. For example, the display elements could overlay a map illustrating the location of the vehicle and/or video feeds from one or more vehicle cameras.

The rendering space used to render the frame representing the rendered instrument cluster is divided into a plurality of tiles 201 each comprising a plurality of pixels. Only the highlighted tiles 209 include the critical display elements in that at least part of a critical display element overlaps with each of the highlighted tiles. The highlighted tiles 209 are an example of the protected tiles discussed in more detail below.

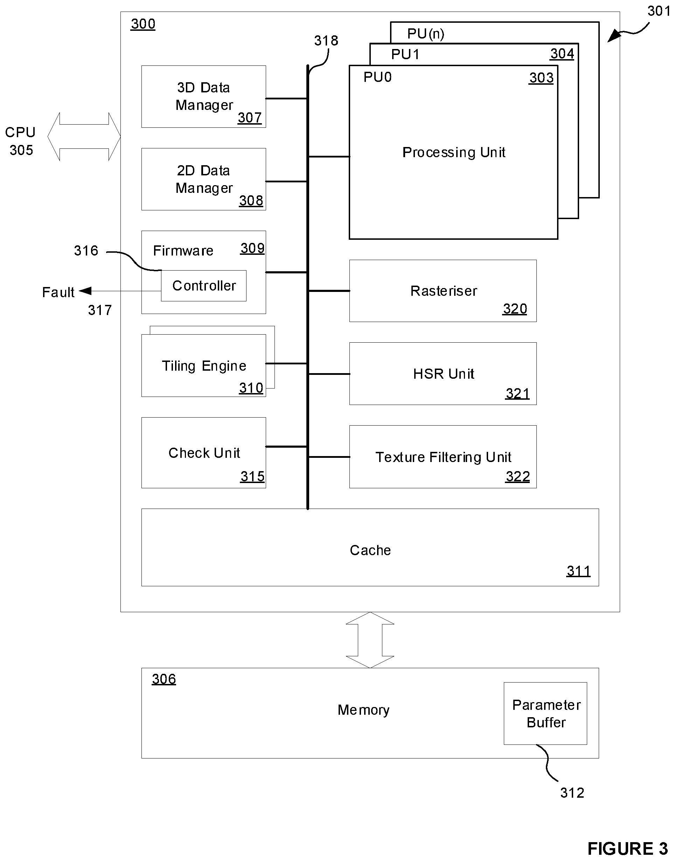

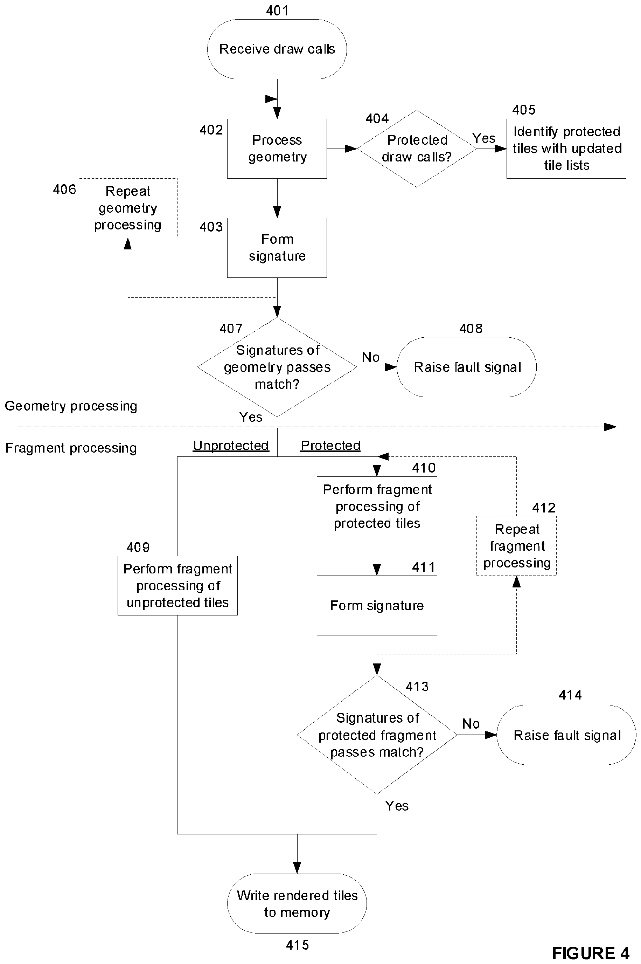

A graphics processing device for performing tile based rendering in accordance with the principles described herein is shown in Figure 3 in the form of a graphics processing unit (GPU) 300. The GPU 300 is suitable for rendering the instrument cluster 200 shown in Figure 2. The operation of the GPU will be described with reference to the exemplary flowchart shown in Figure 4. The GPU 300 comprises one or more processing units 301, labelled in the figure as PU0 to PU(n). There may be any number of processing units. In general the GPU 300 may have any suitable architecture for performing tile-based rendering. In the example shown in Figure 3, the GPU comprises various functional elements to, for example, process tiles and other data, communicate with external devices such as CPU 305 and memory 306, store data and support the processing performed at the one or more processing units 301.

In Figure 3, the GPU 300 comprises a 3D data manager 307 for controlling the three-dimensional rendering of tiles at the processing units 301 and a 2D data manager 308 for controlling the two-dimensional rendering of tiles. The GPU 300 comprises processing logic for executing firmware 309 which may, for example, perform low-level management of the GPU and provide an interface for control messages directed to the GPU. The execution of the firmware 309 implements a controller 316 configured to effect the detection of protected tiles and the redundant processing of protected tiles in accordance with the principles described herein. In the example of Figure 3, the controller 316 is shown as being implemented as part of the execution of the firmware 309 - for example, the controller may be one or more procedures which form part of the firmware run at the GPU. In general, the controller may comprise any number of different software, firmware and hardware components at the graphics processing device. In some examples, the controller includes one or more processes running at the GPU.

The operation and arrangement of the GPU units will vary depending on the particular architecture of the GPU. The 3D and 2D data managers may be part of the firmware and/or may be software processes running at the GPU so as to perform management of 2D and 3D processing. A data bus 318 may be provided over which the elements of the GPU and its processing units communicate.

A cache 311 may be provided at the GPU for receiving data for processing at the processing units 301 and/or receiving processed data from the processing units. In some examples, the cache may be for storing data which is stored at, or to be stored at, memory 306.

A check unit 315 may be provided at the GPU 300 for forming a signature in respect of data provided to it. The check unit may comprise one or more different modules each able to independently form a signature in respect of data provided to that module. The check unit may comprise one or more software processes running at the GPU. In some examples, a check unit may be provided at each processing unit 301. The check unit could be provided at the firmware 309. It is in general advantageous to provide the check unit in hardware (e.g. fixed function circuitry) so as to enable signatures to be efficiently generated at the graphics processing device.

The check unit may perform, for example, a checksum, a CRC, a hash or a fingerprint calculation on the data provided to it so as to form a signature over that data. A signature provides an expression of the data provided to the check unit in a more compact form than the output data from that processing unit itself so as to facilitate comparison of the output data provided on different processing passes performed at the graphics processing device. The check unit may be configured to form a signature over data provided to it and optionally also over one or more memory addresses associated with data and/or other information associated with the data generated by fragment/geometry processing at the graphics processing device.

Data may be provided to the check unit in any suitable manner. In some examples, data held at the cache 311 is provided to the check unit - e.g. by passing the check unit a reference to data held at the cache. The controller 316 may cause data to be provided to the check unit in order to form a signature in respect of that data. Streams of data from a processing unit may be directed to the check unit by the controller 316. The controller may manage the storage of signatures (e.g. at an area of the cache allocated to the controller) and subsequent use of the signatures to verify that data which is generated by a processing pass matches data which is generated by a repeated version of that processing pass.

A geometry engine is configured to process geometry data submitted to the GPU. The geometry data represents the elements of a scene to be rendered. The geometry data may represent a plurality of items of geometry in the scene including, for example, one or more of: primitives to be rendered (e.g. described by vertex data describing vertices of the primitives in the scene), patches to be tessellated, and other objects to be rendered. For example, the geometry data may comprise sets of one or more primitives representing the respective display elements of the instrument cluster shown in Figure 2. Each set of primitives may be created by means of a suitable draw call from a software process arranged to render the instrument cluster. A primitive may be a fundamental geometric shape from which the objects or other parts of a scene may be constructed. A primitive may be, for example, a triangle, a line, or a point.

In the example shown in Figure 3, geometry processing is performed by geometry processing logic of the GPU 300, and tiles are rendered by fragment processing logic of the GPU 300. As described above, the geometry processing logic and the fragment processing logic may share resources of the GPU 300. For example, the processing units 301 may be used to implement part of both the geometry processing logic and the fragment processing logic, e.g. by executing different software instructions on execution units of the processing units. The processing units 301 may be configured to perform SIMD processing.

In the example shown in Figure 3, the geometry processing logic comprises the tiling engines 310 and one or more processing modules executed on the processing units 301. In the example shown in Figure 3 the fragment processing logic comprises the rasteriser 320, the Hidden Surface Removal (HSR) unit 321, the texture filtering unit 322 and one or more shader modules executed on the processing units 301. In this example, the tiling engines, the rasteriser 320, the Hidden Surface Removal (HSR) unit 321, and the texture filtering unit 322 are implemented in fixed-function hardware, whereas the processing modules and the shader modules are implemented in software which is executed by the processing units 301. More generally, any of the functional modules could be implemented in hardware, software, or any combination thereof. Implementing a functional module in hardware (e.g. fixed-function circuitry) is generally relatively more efficient in terms of processing power and latency but relatively inflexible, whereas implementing a functional module in software is relatively less efficient in terms of processing power and latency but is relatively flexible in terms of being able to alter the operation of the module after the hardware design process.

Geometry data (e.g. as generated in response to draw calls 401 from a software process) may be held in memory 306 and read into cache 311 from the memory for processing by the GPU 300. The geometry phase transforms the geometry data describing the elements (e.g. primitives) of a scene so as to form processed geometry data representing the scene from the point of view of the frame to be rendered. The geometry phase processing may perform any suitable processing on the geometry data, including, for example, vertex processing (e.g. vertex shading), clipping, projection, culling and tiling.

Geometry processing typically comprises processing geometry data (e.g. as performed by instructions executed at the processing units 301) so as to transform the items of geometry submitted for processing (e.g. primitives formed from vertices) into screen space and to perform any necessary shading on the geometry, such as vertex shading, and clipping and/or culling based on whether the transformed primitives lie within the view frustum within the scene from the viewpoint. Tessellation may be performed in this stage to determine tessellated primitives from input patches, e.g. by performing vertex shading, hull shading, determining tessellation factors, domain shading and geometry shading.

Tiling is performed on the processed geometry data so as to determine for each tile which primitives are relevant for rendering the tile, and storing associations between primitives and tiles in memory so as to identify the primitives relevant for rendering each given tile. Tiling includes generating for each tile a list (a tile list) of the elements (e.g. primitives) that fall within that tile. Such a tile list may comprise any data organised in any suitable form that indicates which elements are included in which tiles. For example, each tile might have a tile list which indicates all of the primitives which are relevant for rendering that tile (i.e. those primitives which overlap with that tile). The output of the geometry processing phase (e.g. the tile lists and the transformed and/or otherwise manipulated geometry) are stored in memory for use in the fragment processing phase. The output of the geometry processing phase may be referred to as parameter data which, in the example shown in Figure 3, may be held at parameter buffer 312.

In the example shown in Figure 3, tiling is performed at one or more tiling engines 310. Each tiling engine may be configured to operate on processed geometry data received from modules executing at the processing units 301. In some examples, the tiling of the processed geometry data into tiles may be performed at the processing units 301 or at any other part of the graphics processing system. Tiling may be performed according to any suitable algorithm - for example, using perfect tiling, a bounding box approach or a hierarchical tiling approach. Many such algorithms are known and will not be discussed further herein. A tile may be considered to include an element of a scene when any part of that element is calculated by the tiling algorithm to overlap with any part of the area of the tile - for example, when an element overlaps with all or part of any of the pixels of the tile.

Fragment processing is performed on the output of the geometry processing phase (e.g. the tile lists and transformed geometry data). In the exemplary GPU 300 of Figure 3, fragment processing is performed at one or more modules executing at the processing units (e.g. software instructions arranged to execute at the processing units) and at the rasteriser 320, HSR unit 321 and texture filtering unit 322. In some examples, the tile list is fetched for each given tile to be rendered and the transformed primitive data is fetched which is indicated by that tile list as being relevant to the fragment processing of that tile. Fragment processing may comprise one or more of: texture processing, shader processing, rasterization, hidden surface removal, and alpha processing. Fragment processing may be performed at one or more units (e.g. arranged in a pipeline) for performing different aspects of the fragment processing. Rasterisation (e.g. scan conversion) is performed (e.g. at rasteriser 320) in order to identify which sample positions each primitive covers and to generate primitive fragments at those sample positions. A primitive fragment represents values of a primitive (e.g. depth, texture coordinates, etc.) at a particular sample position. Typically, until rasterisation is performed, primitives are defined in terms of their vertices. In the example shown in Figure 3, rasterization is performed at rasteriser 320.

Hidden surface removal (HSR) may be performed during fragment processing in which depth comparisons are made at each sample position to determine which primitive fragment is visible at each sample position. In the example shown in Figure 3, hidden surface removal is performed at HSR unit 321.

Shading and/or texturing may be performed during fragment processing. A colour value may be determined for a sample position for a primitive fragment which has been identified as being visible at that sample position, e.g. by running a shader program for the primitive fragment which may involve fetching a texture sample based on a texture co-ordinate. Texture filtering may be performed (e.g. at texture filtering unit 322). Fetching a texture sample might involve the texture filtering unit performing filtering (e.g. bilinear filtering, trilinear filtering, or anisotropic filtering, on a group of texels of a stored texture) - for example in cases when the desired texture co-ordinate lies between texels of the texture.

In some examples some post-processing may be performed before the pixel values are written out to a frame buffer. For example, if there is more than one sample position per pixel position then rendered values for sample positions may be combined to determine the rendered pixel values. This can be useful for anti-aliasing.

The above paragraphs describe a "deferred" rendering approach in the sense that the hidden surface removal is performed before the shading/texturing. In other examples, rendering may be performed which is not deferred.

Processed geometry data (e.g. transformed vertex data) for a scene as a whole may be stored. For each tile of a frame to be rendered, a list of the elements (e.g. the primitives) that overlap with that tile may be stored as a tile list. The tile list may refer to the transformed elements in the processed geometry data for the scene, avoiding duplicating storage of processed geometry data for such elements (e.g. due to elements of the scene overlapping more than one tile). In other examples, some or all of the processed geometry data required to perform fragment processing of each tile may be stored separately for each tile.

The processed data from the geometry phase may be stored at any suitable location for subsequent use in the fragment processing phase. For example, the output of geometry processing (such as transformed vertex data and tile lists) may be stored at memory 306 (e.g. at a parameter buffer 312) and may be accessed by the units of the GPU which are arranged to perform fragment processing through cache 311. In some examples the processed data from the geometry phase may be held at a processing unit 301 and/or at cache 311.

Geometry processing is performed in respect of a complete frame to be rendered and not performed on a tile-by-tile basis. This is because until the geometry is processed it is not known, for example, where the elements of the scene are located in relation to the tiles of the frame to be rendered, the apparent size of the elements, and whether those elements are visible.

The architecture illustrated in Figure 3 is merely exemplary: in general there may be any number and arrangement of units of the GPU 300 operating according to any tile-based rendering architecture.

The output of calculations performed during fragment processing may be written to one or more buffers - for example, one or more of: a colour buffer for storing colour values (e.g. of pixels), a depth buffer for storing depth values (e.g. of pixels) and a stencil buffer for storing an indication as to which parts (e.g. pixels) of a tile are to be rendered. Such buffers may be maintained in any manner appropriate to the GPU architecture, including at one or more of system memory 306 and GPU cache 311. The use of such buffers is well known in the art and will not be discussed in detail here.

In some examples, the check unit 315 may be arranged to form a signature over sets of one or more writes of data from the GPU 300 to memory 306 (e.g. writes of parameter data and tile lists output from the geometry processing phase, or writes of pixel data output from the fragment processing phase). For example, each time a unit of the GPU writes to one of its colour, depth or stencil buffers, the data comprised in that write may be directed (e.g. by controller 316) to the check unit 315 for the check unit to generate a signature in respect of that write. A signature representing the data generated over a set of multiple writes may be represented by an accumulation of the signatures generated for each write of the set. Since the content of the buffers written to during fragment processing are representative of the fragment processing performed by the respective processing unit, the total set of signatures formed over the writes to the buffers made during fragment processing may be representative of the complete output of fragment processing performed at the GPU.

One or more writes could be batched together for submission to the check unit with the check unit being configured to generate a signature over the writes of a batch. The signatures formed over the writes to the buffers during fragment processing may be accumulated at any suitable location - for example, at cache 311 or any other data store at or accessible to the check unit. Stored signatures may be associated at the data store with information representing the protected tile to which the signature relates (e.g. an identifier or coordinate of the tile) and the buffer to which the signature relates (e.g. which of the colour, stencil and depth buffers the write was directed to in respect of which the signature was formed).

The tile-based deferred rendering architecture illustrated in Figure 3 is merely an example. In general the processing unit and the GPU may have any tile-based rendering architecture.

A graphics processing system configured in accordance with the principles of the present disclosure is operable to render frames that include safety critical display elements, such as the instrument cluster of Figure 2. This will now be described by way of example with reference to the GPU shown in Figure 3.

The geometry data received for processing at the GPU 300 may comprise elements (e.g. objects, primitives or other parts of a scene to be rendered) which are safety critical. An application submitting geometry to the GPU 300 may submit batches of geometry to be rendered, where each batch either does or does not comprise safety critical elements. Each batch of geometry may be submitted as one or more draw calls to the GPU. For example, the geometry for a render might be submitted as a batch of non-safety critical geometry and then a batch of safety critical geometry. For example, with reference to Figure 2, a batch of one or more draw calls may be submitted to the GPU so as to cause safety critical element 206 to be rendered, and a separate batch of one or more draw calls may be submitted to the GPU so as to cause non-safety critical element 205 to be rendered. The controller 316 may cause each batch of draw calls to be submitted to the GPU in accordance with the principles described herein based on whether they are safety-critical or not. Thus, the firmware of the GPU may know what geometry is safety-critical and what is not, but the hardware need not be aware of which geometry is safety-critical.

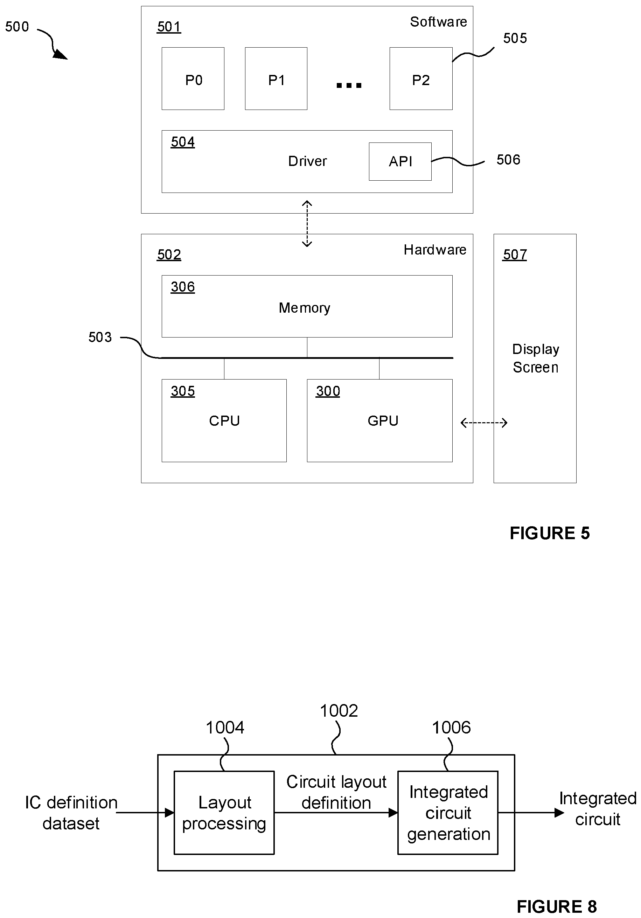

A typical arrangement of a GPU at a data processing system 500 is illustrated in Figure 5, in which GPU 300 is shown in hardware 502 along with a memory 306 and a CPU 305. The GPU, CPU and memory may be arranged to communicate over a data bus 503. The data processing system comprises a software environment 501 which comprises one or more processes 505 executing at the CPU and a driver 504 for the GPU. The driver provides an application programming interface (API) 506 arranged to receive draw calls from a process 505 so as to cause the GPU to render a scene to a display screen 507. For example, the API may be an OpenGL API and the process may be an application arranged to issue OpenGL draw calls so as to cause the GPU to render the instrument cluster shown in Figure 2 to a display screen at the dashboard of a vehicle. In some arrangements, the GPU may be configured to itself execute software in the form of functions, routines and other code arranged for execution at units of the GPU (e.g. its processing units 301 and/or firmware 309).

The source of the geometry data defining the scene to be rendered may identify which elements of the scene are safety critical. For example, a mechanism may be provided to enable a process to identify that a draw call or a group of one or more draw calls relates to a safety critical element. In the OpenGL framework, for example, the API calls *glEnable()* and *glDisable()* may be used to set a state bit for a draw call which indicates whether or not the draw call relates to a safety critical element. Suitable mechanisms may be provided at the driver (e.g. as a function of the driver which can be called by a process or at an API it provides) or more generally at any combination of software, firmware and hardware. Such mechanisms can allow an application developer to control which parts of a scene are safety critical and so - in the manner which will now be described - which tiles of the frame to be rendered are to be protected.

### Protected tile identification

A graphics processing system configured in accordance with the principles set out herein is configured to identify in the geometry phase which tiles of a frame to be rendered include safety critical elements. Such tiles are referred to as protected tiles. Protected tiles are processed at the graphics processing system in order to satisfy a predefined safety level, e.g. by processing the protected tiles in the rendering phase (also referred to herein as the "fragment processing phase") more than once and checking that the same result is produced each time. Non-protected tiles which do not include safety-critical elements need not be redundantly processed in the rendering phase, reducing the processing demands of meeting the safety-level for frames which have a mix of tiles including safety-critical elements and tiles not including safety-critical elements. The identification of protected tiles during tiling will now be described.

Often only some of the tiles to be rendered at the graphics processing system will include safety-critical elements and are therefore to be processed as protected tiles in the rendering phase. As described above, tiling is performed in the geometry processing phase in order to identify which elements of a scene lie within each tile. Tiling includes generating a tile list for each tile which identifies the elements (e.g. primitives) that fall within that tile. A tile list may be any data structure which identifies which elements of a scene lie in which tiles. When an element of a scene is processed during tiling, the tile lists of the tiles in which that element falls are updated to include an indication of that element.

When a safety-critical element is processed, the tile lists of those tiles which include that safety-critical element are updated. The controller 316 of the graphics processing device is configured to submit a batch of one or more safety-critical elements for processing in the geometry processing phase by the GPU and to determine which tile lists have been updated when the batch of safety-critical elements have been processed and, in response, identify the corresponding tiles as protected tiles which are to be redundantly processed in the rendering phase. A protected tile may be marked in the graphics processing system in any suitable manner.

The controller 316 may be configured to identify when a tile list is updated in any suitable manner. For example, the tile lists of a frame may be monitored to identify when each tile list is updated in response to tiling one or more safety-critical elements. Typically, during tiling, the tile lists of the tiles of a frame will be built up in a memory accessible to the GPU (e.g. at cache 311 in the GPU of Figure 3). Monitoring a tile list could comprise checking each tile list before and after one or more safety-critical elements are tiled in order to identify which tile lists have changed. This can however be relatively expensive in terms of processing and data movement overheads at the GPU. Preferably the controller is configured to compare the tile lists before a batch of safety-critical elements is submitted for geometry processing to the tile lists after that batch of safety-critical elements has finished the geometry processing phase. This enables a single comparison to be performed for each batch of safety-critical elements and the one or more tile lists identified which are modified by geometry processing that batch of elements.

An example of the process of identifying protected tiles is illustrated at the start of the flowchart of Figure 4. In response to receiving one or more draw calls 401 (e.g. corresponding to a batch of elements for geometry processing), geometry processing (including tiling) 402 is performed at the GPU. If 404 the geometry processing relates to safety-critical elements (e.g. as identified in the draw calls 401), then tiles whose tile lists are updated during geometry processing are identified 405 as protected tiles by the controller. For example, an application submitting elements for rendering could set a flag (e.g. using a glEnable() call in an OpenGL architecture) to indicate that the following geometry to be submitted is safety-critical. Once the application has submitted the safety-critical geometry, it then disables the flag (e.g. using a glDisable() call) to indicate that the following geometry to be submitted is not safety-critical. The controller at the firmware of the GPU submits the batches of geometry for geometry processing. If a batch is safety-critical then the controller compares the tile lists before the safety-critical batch is processed and to the tile lists after the safety-critical batch is processed in order to determine the protected tiles 405.

It can be advantageous to maintain a parameter for each tile list which indicates whether the tile list has changed such that checking that parameter before and after one or more safety-critical elements are tiled reveals whether the associated tile list has changed. For example, as each tile list is accumulated during tiling of the elements of a scene, the tile lists grow as new references to the elements of the scene are added to the tile lists of the tiles in which those elements lie. A set of pointers (such as pointers held in a Tail Pointer Cache, or TPC) may be maintained which point to the endpoint of each tile list in memory - e.g. the position of the last element reference written to a region of memory allocated to the tile list, or the position of the next element to be written in a region of memory allocated to the tile list. Since the pointer for a given tile changes when an element is tiled which is found to lie in that tile, the pointer can be used to determine whether the state of the tile list of that tile has changed. The pointer may be maintained in any suitable manner at a GPU. For example, a simple process running at the GPU may update the pointer in response to the tile lists being written to.

By capturing the pointers of a set of tiles before and after each set of one or more safety-critical elements are tiled, the graphics processing system can determine which tile lists are changed by tiling the safety-critical elements and hence which corresponding tiles should be identified as being protected tiles. For example, controller 316 may be configured to capture a Tail Pointer Cache (TPC) before and after each set of one or more safety-critical elements are tiled so as to identify which tiles are updated and hence which should be marked as protected tiles.

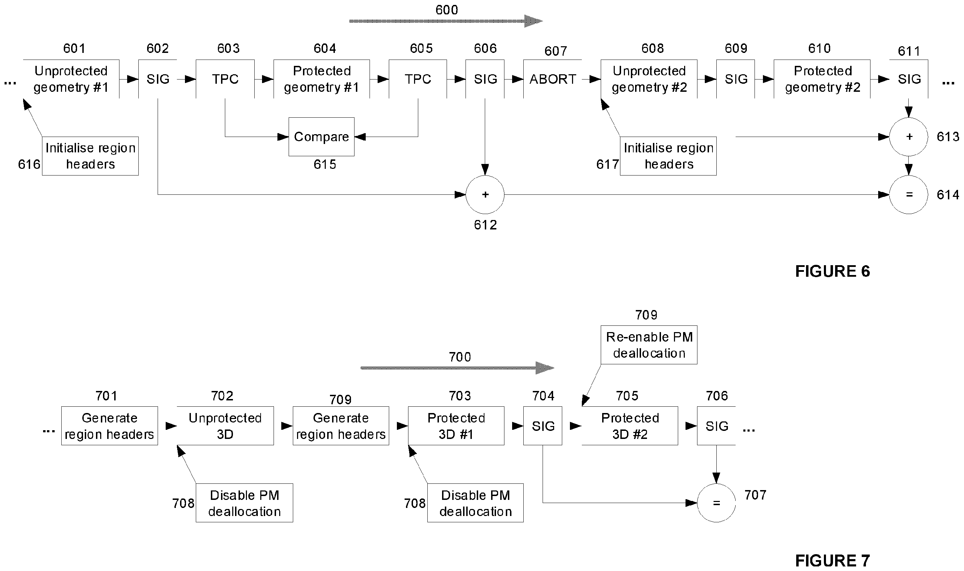

This process is illustrated by way of example in Figure 6, which will be discussed more fully below. Figure 6 shows a sequence of actions taken by the firmware during geometry processing. The firmware submits a batch of unprotected geometry to be processed by the GPU 300 at block 601 (e.g. including geometry data received from an application as a set of draw calls relating to non-safety-critical elements). Prior to performing protected geometry processing 604 (e.g. geometry data generated in response to a set of draw calls relating to safety-critical elements), a snapshot of the TPC is taken 603 by the controller 316 so as to capture the state of the tile lists before the geometry processing is performed on the safety-critical elements of geometry. The geometry processing 604 is then performed on the safety-critical elements of geometry and subsequently the controller 316 takes a further snapshot of the TPC so as to capture the state of the tile lists after geometry processing of the safety-critical elements of geometry. The TPC snapshots before and after geometry processing 604 are compared 615 by the controller in order to identify which tile lists have been updated and hence which corresponding tiles are to be handled as protected tiles during fragment processing.

The use of the signatures 602 and 606 by the check unit 315 when performing redundant geometry processing will be described below. In general, protected and unprotected geometry processing may be performed in any order: e.g. protected geometry processing could be performed first, followed by unprotected geometry processing. The term "protected geometry processing" is used herein to mean geometry processing of safety-critical elements of geometry, and the term "unprotected geometry processing" is used herein to mean geometry processing of elements of geometry which are not safety-critical.

It can be advantageous to arrange that the source of the elements of a scene to be rendered groups together safety-critical elements for rendering at the graphics processing device. For example, in systems in which one or more elements are submitted for rendering by a draw call, the source of the draw calls (e.g. an application, such as 505 in Figure 5) may be configured to group together draw calls relating to safety-critical elements of a scene. This can have the advantage of reducing the number of checks (e.g. the TPC snapshots 603 and 605 and the subsequent comparison 615) as to which tile lists have been updated in response to tiling safety-critical elements and hence the associated processing overhead. Any number of safety-critical elements could be grouped together.

The source of the draw calls may be configured to split draw calls that relate to safety-critical elements from draw calls that relate to non-safety-critical elements such that each workload for geometry processing at the graphics processing device relates to either safety-critical elements or non-safety-critical elements, but not a mix of both.

For example, with reference to Figure 2, an application configured to cause the instrument cluster 200 to be rendered could group together draw calls relating to the safety-critical elements which make up the speedometer 202 and the critical warning icon 206.

A group of safety-critical draw calls may be submitted to the graphics processing device 300 in any manner appropriate to the architecture of the device. For example, draw-calls may be received at an API (Application Programming Interface) provided by a driver (e.g. 504 in Figure 5) and passed to the graphics processing device, potentially after initial processing. In some architectures, draw calls may be interpreted at the API/driver into a set of instructions for the graphics processing device.

In some examples, a driver/API could group together safety-critical elements received from an application. For example, the driver could identify draw calls relating to safety-critical elements in a stream of draw calls it receives from an application and, if necessary, process those draw calls such that those relating to safety-critical elements are grouped together for submission in a batch to the GPU (potentially after further processing by the driver/API) for geometry processing. In some architectures however it is necessary to maintain the order of elements submitted by an application so as to avoid causing rendering errors (e.g. when handling translucency or punch-through).

### Redundant geometry processing

Errors in geometry calculations - even those which relate to non-safety critical elements of a scene - could cause elements to be written to protected tiles of a frame to be rendered. For example, with reference to Figure 2, errors in geometry calculations relating to information icon 204 could cause the icon to be incorrectly rendered across one or more of the protected tiles 209, obscuring safety-critical elements of the instrument cluster. The geometry processing phase of rendering a frame which includes any safety critical elements is therefore performed at least twice at the graphics processing system and the outputs of each pass are compared to check that the geometry calculations are in agreement. This is represented in the exemplary flowchart of Figure 4 by the repeat geometry processing step 406 and the check performed at step 407. If the outputs of geometry processing passes do not match, a fault signal 408 may be raised by the controller 316 to indicate that a fault has occurred. By performing redundant processing, a graphics processing system configured in accordance with the principles described herein may be arranged to meet a required safety level in respect of its processing of safety-critical geometry. Geometry processing includes tiling. In some example, tiling may be performed at one or more tiling engines 310.

The check unit 315 may be configured to, for each geometry processing pass, form one or more signatures which are characteristic of the data generated by the geometry processing (e.g. the tile lists and the associated transformed geometry data). The controller 316 may be configured to cause the check unit to generate a signature based on the data output by the geometry engine. The output of the geometry processing phase may comprise a tile list of the elements present in each tile of the frame to be rendered, along with transformed vertex data describing the elements of the scene from the point of view of the frame.

In some examples a signature is formed in respect of each write from the geometry processing phase to parameter buffer 312. The signatures formed at the check unit in respect of each geometry processing pass are compared 407 so as to verify that the geometry processing performed in each pass is in agreement. The comparison of signatures could be performed at any suitable level of granularity - for example, at a bit, byte, word level. The controller may be arranged to perform the comparison of the signatures formed at the check unit in respect of each geometry pass of a given set of protected geometry data. In some examples, the comparison of signatures may be performed in hardware - for example at check unit 315 itself or at any other unit of the GPU 300.

The check unit operates on at least the processed data generated by the GPU during the geometry processing phase for a render (e.g. for a frame). The check unit may additionally operate on memory addresses and/or control data comprised in the output from the geometry processing phase - this can help the validation operations described herein to identify a wider range of faults.

The signature(s) generated for a geometry pass may be stored at the GPU (e.g. at cache 311) for subsequent use (e.g. for comparison with the signature of another pass in respect of the same frame). The check unit may perform, for example, a checksum, a CRC, a hash or a fingerprint calculation on the output data. The one or more signatures generated for a geometry pass provide an expression of the processing performed on the geometry data for a render during the geometry processing phase in a more compact form than the output data from the geometry processing phase itself so as to facilitate comparison of the output data provided on different geometry processing passes.

In general, the GPU may have any kind of architecture and may utilise any scheme for distributing geometry data to physical processing units. Geometry data may be allocated to processing units for geometry processing by a component of the GPU. For example, for 3D workloads, the 3D data manager 307 may be configured to allocate geometry data to processing units.

A check as to whether a scene includes any safety critical elements may be performed. Such a check could be performed anywhere at the graphics processing system. For example, its driver may determine whether any of the draw calls in respect of a frame identify an element as being safety critical: if so an identifier may be set for the frame as a whole indicating that the graphics processing system is to process the frame in a protected mode in which geometry processing is to be repeated. In other examples, it could be the responsibility of the application developer to identify that a frame includes safety critical elements and therefore geometry processing is to be repeated. If a frame does not include safety critical elements then geometry processing may be performed a single time for each frame.

The controller 316 is configured to raise a fault signal 408 on determining that the geometry processing performed on different passes of the same frame do not match. An undetected fault could potentially lead to a safety violation at the GPU - whether or not fragment processing is protected according to the redundant approach described herein. For example, a fault in the geometry calculations performed in respect of the instrument cluster shown in Figure 2 could cause corruption of safety critical elements of the instrument cluster, such as the speedometer.

The fault signal 408 raised in respect of an error in geometry processing may be provided in any suitable manner. A fault signal indicates that the processed output from different geometry passes of the same frame are not the same and therefore the output from the geometry processing phase is invalid. Such a fault signal may be provided as an output of the GPU 300 (e.g. as a control signal passed up to its driver) and/or it may be used internally at the GPU. For example, a fault signal raised in respect of an error in geometry processing may cause the protected geometry processing to be restarted - e.g. by the controller and/or driver causing the workload on which geometry processing was performed to be resubmitted to the GPU. In response to a fault signal being raised, the controller and/or driver may be configured to flush the geometry and/or tiling units and cache memory. A fault signal could be provided to any entity of the GPU or a data processing system 500 at which the GPU is incorporated - for example, the fault signal may be provided to a software entity (e.g. the driver 504 and/or an application 505) configured to log the error, prevent the display of a frame with respect to which the error was raised, reset the graphics processing device, etc.

The fault signal 408 may be one or more of: control data; data written out to memory 306; data written to a register or memory of the GPU or a system to which the GPU is connected, and an interrupt or other signal to a CPU (e.g. 305) or other system to which the GPU is connected. The output of geometry unit(s) configured to process the same geometry data may differ due to transient events such as ionizing radiation or voltage spikes, or permanent errors due to bugs in some combination of hardware, software and firmware.

If the outputs from the different geometry processing passes are the same, then the processed geometry may be considered valid and one or more of the outputs of those geometry passes may be made available for fragment processing in accordance with the principles described herein. If the outputs from different geometry processing passes of the same frame do match then no fault signal may be raised or, in some examples, a signal may be raised indicating that the outputs do match.

The fault signal raised in respect of the geometry phase may be the same or different to the fault signal raised in respect of the fragment processing phase. The fault signal raised in respect of the geometry phase may be any kind of indication that a fault has occurred, including, for example, one or more of a control message, an interrupt, a flag in control data, one or more bits set at a register, and a data packet.

The graphics processing device may be configured to write out to a data store (e.g. parameter buffer 312) and/or memory 306 the validated output from the geometry processing phase. It can be advantageous to arrange that only one of the geometry-processed outputs generated in respect of a frame is written out to the cache and/or memory. This can avoid duplication of data at the data store. For example, the controller may be configured to discard the output of the first geometry processing pass once the signature has been formed. In other examples, the output of each geometry processing pass may be written out to cache and/or memory in the usual manner. A subsequent geometry processing pass may be arranged to overwrite the cache/memory areas used to store the output of the first processing pass (e.g. in the case that a particular set of memory addresses are allocated to receive the output of the geometry processing pass of a frame).

On processing the protected geometry for a first time at step 604, a signature 606 is formed which represents the output of that protected geometry processing. There may be multiple unprotected geometry processing events 601 and/or multiple protected geometry processing events 604, each resulting in a respective signature 602/606. Each geometry processing event may correspond to a group of protected/unprotected draw calls batched together at the source application and/or driver in the manner described above.

The signatures of the outputs from the first geometry pass may be combined at 612 so as to form a signature. The signatures of the outputs from the first geometry pass may comprise one or more signatures for unprotected geometry processing events and one or more signatures for protected geometry processing events. The combination 612 may be, for example, a simple aggregation of individual signatures relating to protected/unprotected elements, a signature formed at the check unit 315 over a plurality of protected/unprotected elements, or any other suitable combination. In general, protected and unprotected geometry processing could be performed in any order in each pass: e.g. protected geometry processing could be performed first, followed by unprotected geometry processing. Typically the order would be determined by the order the geometry is submitted for processing.

Before the second geometry pass commences, memory allocated to the first pass (e.g. at the parameter buffer 312) may be released and the information stored at the parameter buffer by the first pass may be discarded. This can help to ensure that the processing performed in the first pass does not affect the processing performed in the second pass. For example, an ABORT command 607 or similar may be used to release cache memory allocated to the first pass and cause the data for the one or more frames that are to be geometry processed in the current workload to be read in again to the cache 311 from memory 306. Where both geometry passes write output to memory (e.g. to parameter buffer 312), the ABORT command may cause that memory to be released such that it may be reused to store the output of the second geometry pass.

The controller 316 causes the geometry data for the same frame to be re-submitted to the geometry engine for geometry processing in a second pass. In some examples, the controller may be configured to maintain the source data on which geometry processing is performed at the cache whilst the first geometry processing pass is performed. In some examples, the controller may be configured to read the source data in from memory for a second time for processing in the second geometry pass.

Since the same input data is used, unprotected and protected geometry processing is again performed separately in the second pass. In some examples (as is shown in Figure 6), the TPC is not captured before and after performing protected geometry processing in the second pass. In some examples, the TPC capture and comparison is performed in the second pass and not the first pass. In some examples, the TPC is captured before and after performing protected geometry processing in both the first and second geometry passes. The controller may be configured to compare the one or more TPCs captured in the first geometry phase with the one or more TPCs captured in the second geometry phase so as to verify that the two phases yield the same sets of protected tiles. In general, identifying a set of protected tiles in a frame may comprise detecting which tile lists are updated in any one or more of the geometry phase passes.

Similarly to in the first pass, a signature 609 is formed for the output of the unprotected geometry processing 608 performed in the second pass, and a signature 611 is formed for the output of the unprotected geometry processing 610 performed in the second pass. There may be multiple unprotected geometry processing events 608 and/or multiple protected geometry processing events 610, each resulting in a respective signature 609/611. The signatures of the outputs from the first geometry pass may be combined at 613 so as to form a signature. The signatures of the outputs from the first geometry pass may comprise one or more signatures for unprotected geometry processing events and one or more signatures for protected geometry processing events. The combination 613 may be, for example, a simple aggregation of the protected and unprotected signatures, a signature formed at the check unit 315 over the protected and unprotected signatures, or any other suitable combination.

The combined signature from the first pass formed at 612 and the combined signature from the second pass formed at 613 are compared by the controller 316 for the subject frame at 614 in order to verify that the geometry processing performed in the first pass matches the geometry processing performed in the second pass. The comparison of the combined signatures from the first and second passes could be performed at any suitable level of granularity - for example, at a bit, byte, or word level. If the signatures from the first and second passes do not match, the controller raises a fault signal to indicate a fault in respect of geometry processing of the frame.

In the architecture illustrated in Figure 6, prior to commencing each geometry processing pass, the graphics processing system may be configured to initialise region headers which identify the memory addresses at which the processed vertex data and tile lists generated in the geometry phase are to be stored. A region header for a given tile may point to and/or represent the start of a tile list for that tile. These region headers may be used in the fragment processing phase to identify the data of a frame on which fragment processing is to be performed, as is illustrated in the example shown in Figure 7 and described below.

### Redundant fragment processing

Once geometry processing is complete, tiles may be submitted to the processing units for fragment processing. A graphics processing system configured in accordance with the principles described herein is arranged to perform fragment processing at least twice on each protected tile and to compare the outputs of those passes to check that they match. If the outputs of the fragment processing passes do not match, a fault signal is raised by the controller 316 to indicate that a fault has occurred. By performing such redundant processing, a graphics processing system may be arranged to meet a required safety level in respect of its processing of protected tiles. Fragment processing is not repeated for unprotected tiles so as to avoid double rendering the entire scene. Therefore, the graphics processing system described herein is more efficient (e.g. in terms of reduced power consumption and reduced latency) compared to a system which duplicates all of the processing involved in rendering frames which include safety-critical geometry.

In some examples, fragment processing may be started once the first geometry processing pass has been completed and tile data for fragment processing is available but before the second geometry processing pass has completed. This approach can minimise any delays introduced by repeating geometry processing. If a fault signal is raised in respect of geometry processing, the fragment processing may be aborted and the frame data re-submitted to the graphics processing device for geometry processing to begin again.

In many applications of a GPU, not all of the elements in a scene will be safety critical. For example, in Figure 2 only around 40% of the tiles representing the rendered instrument cluster include safety critical elements. The present disclosure provides an efficient approach to protected rendering in which fragment processing is duplicated only for protected tiles which have been identified in the geometry phase as including safety-critical elements. Since fragment processing typically dominates the rendering performance of a GPU, the present approach can provide substantial performance benefits over conventional systems such as dual lockstep processors in which both processing cores must necessarily both perform the same rendering operations, even if those operations do not relate to safety-critical elements of a scene.

A fault signal 317 raised by the controller may be provided in any suitable manner. The fault signal may be any kind of indication that a fault has occurred, including, for example, one or more of a control message, an interrupt, a flag in control data, one or more bits set at a register, and a data packet. A fault signal indicates that the processed outputs from different passes of the same protected tile are not the same and therefore the processed output from one or more of the processing unit(s) that generated those processed outputs is invalid. The outputs of processing unit(s) configured to process the same protected tile may differ due to transient events such as ionizing radiation or voltage spikes, or permanent errors due to bugs in some combination of hardware, software and firmware.

An undetected fault could potentially lead to a safety violation at the GPU. For example, a fault in rendering any of the protected tiles 209 of the instrument cluster shown in Figure 2 could cause corruption of safety critical elements of the instrument cluster, such as the speedometer. By identifying in the geometry phase which tiles include safety critical elements and providing that information with the processed geometry data for fragment processing, a graphics processing device is arranged to process protected tiles at least twice and verify the rendered output of the protected tiles. Unprotected tiles are processed only once, reducing the processing overhead in comparison with simple redundant systems (e.g. dual lockstep processors) which simply repeat the entire rendering processing for a whole frame in order to verify the rendered output. In accordance with the principles described herein, such redundant processing can be achieved with conventional graphics processing hardware - e.g. no formal protected processing path need be provided in the hardware and the hardware need not be modified in order to repeat the fragment processing of protected tiles.

The protected rendering performed by a graphics processing system configured in accordance with the principles set out herein will now be described in more detail with reference to Figure 3 and the flowchart shown in Figure 4.

The data processing device is arranged to repeat fragment processing of the protected tiles identified in the geometry phase. This is illustrated in Figure 4 in which fragment processing of protected tiles 410 is repeated 412. After each fragment processing pass of a protected tile a signature is formed 411 at check unit 315. The signatures could be formed in respect of the output of a single protected tile, a group of protected tiles, or all of the protected tiles of a frame.

The signatures of the protected fragment passes are compared at 413 and if the signatures do not match then a fault signal is raised 414. In some examples, the controller 316 may cause the protected tile in respect of which a fault signal is raised to be resubmitted for fragment processing on the protected fragment processing path - e.g. fragment processing is performed first and second times and the signatures of the passes compared in order to verify that the signatures match. In some examples in which workloads of protected tiles are fragment-processed, each workload comprising a set of protected tiles, the controller 316 may cause a workload of protected tiles in respect of which a fault signal is raised to be resubmitted for fragment processing on the GPU. In some examples, the controller and/or driver may cause fragment rendering of the whole frame to be restarted when a fault is raised during fragment processing of a protected tile of the frame. In response to a fault signal being raised, the controller and/or driver may be configured to flush the processing units and data associated with the workload (e.g. at cache 311) in respect of which the fault was raised.

In some examples, the controller and/or driver may be configured to cause both geometry and fragment processing to be restarted for a frame when a fault signal is raised in respect of that frame.

Unprotected tiles are fragment processed a single time 409. It may be the case that no signature is formed in respect of the fragment-processed output of unprotected tiles.

If the fragment processing of protected tiles is performed without a fault signal being raised then the one or more rendered tiles being fragment processed are written to memory 415. In this case the one or more rendered tiles generated at the graphics processing system may be considered valid and used in a manner appropriate to the application (e.g. in the example of Figure 2, the rendered tile data may be part of instrument console 200). If the outputs from different fragment processing passes of the same tile do match at step 413 then no fault signal may be raised or, in some examples, a signal may be raised indicating that the outputs do match.

An exemplary sequence of actions 700 used to effect fragment processing at the graphics processing device 300 is shown in Figure 7. The controller 316 is configured to cause region headers to be generated such that the tiles on which fragment processing is to be performed are divided into two groups: the unprotected tiles (e.g. all those tiles which are not marked as being protected tiles) and the protected tiles. At block 701, the graphics processing device may be configured to generate region headers representing the start of the tile lists identifying the primitives in each unprotected tile on which the fragment processing is to be performed.

The fragment processing of unprotected tiles is performed in response to instruction 702. The unprotected tiles are processed a single time. At block 709, the graphics processing device may be configured to generate region headers representing the start of the tile lists identifying the primitives in each protected tile on which the fragment processing is to be performed. The fragment processing of protected tiles is performed in a first pass in response to instruction 703. One or more signatures 704 are generated at the check unit 315 for the fragment processed data of the first pass. The fragment processing of the protected tiles is performed for a second time in a second pass in response to instruction 705. This can be arranged in any suitable manner. For example, the controller 316 may be configured to generate the region headers such that the tile lists of protected tiles are identified twice in the region headers, causing the processing units of the GPU to read-in and process the tile data of protected tiles twice. In other examples in which a fragment processing instruction is issued in respect of each tile of a frame, the controller 316 may be configured to duplicate the fragment processing instructions in respect of protected tiles so as to cause those tiles to be processed twice.

In some examples separate sets of region headers may not be generated for the unprotected and protected groups of tiles. For example, a single set of region headers may be processed once to select for processing only the tiles marked as unprotected (e.g. in response to instruction 702), and subsequent times to select for processing only the tiles marked as protected (e.g. in response to instructions 703 and 705). In other examples, the fragment processing is not divided into discrete groups of protected and unprotected tiles, with protected and unprotected tiles being processed in any order and signatures being formed in respect of the fragment processed output of protected tiles only.

One or more signatures 706 are generated at the check unit 315 for the fragment processed data of the second pass. The controller 316 is configured to compare 707 the signature(s) 704 formed in respect of the first fragment processing pass with the signature(s) 706 formed in respect of the second fragment processing pass. If the signatures do not match, a fault signal is raised.

Typically, a GPU (e.g. its parameter manager) will be configured to release the data relating to a tile from the cache 311 and/or parameter buffer 312 once fragment processing has been performed. The controller 316 may be configured to prevent the GPU from releasing data relating to unprotected and protected tiles on the first fragment processing pass being performed so as to ensure that the tile data is available for performing fragment processing of protected tiles on the second pass. In some examples, the allocation and deallocation of parameter buffer memory for the tiles of a frame is handled by a parameter manager. In the example shown in Figure 7, the deallocation of memory by the parameter manager is disabled 708 prior to the fragment processing of tiles being performed. This prevents the parameter manager from releasing (deallocating) memory pages that were previously allocated in the geometry processing phase. The GPU still requires the data held in those pages as it may be referenced by subsequent unprotected and protected fragment processing phases. The controller 316 may issue the instruction 708 to disable the memory deallocation at the appropriate time. A subsequent instruction 709 may be issued to re-enable memory deallocation by the parameter manager once protected fragment processing (or at least the first pass of protected fragment processing) has been completed.

In general unprotected and protected tile fragment processing may be performed in any order: for example, protected fragment processing may be performed first, followed by unprotected fragment processing. In some examples, protected and unprotected fragment processing may be performed at different processing units and could be performed concurrently.

Tiles may be allocated in any suitable manner to the one or more processing units 301 for fragment processing. For example, for 3D workloads, the 3D data manager 307 may be configured to allocate each tile (i.e. the data generated in the geometry phase for a tile) to a processing unit. Each processing unit is configured to perform fragment processing for a tile on the data for that tile which is output by the geometry processing phase (e.g. transformed vertex data and a tile list). Allocating a tile for fragment processing may comprise passing a reference to the tile data generated in the geometry processing phase and held at the parameter buffer 312. For example, the processing units may be passed one or more region headers generated in advance of the respective fragment processing passes, and indicating the tile data on which fragment processing is to be performed.

In a system comprising a plurality of processing units, each processing unit of the system may be arranged to process any given task independently of any other processing unit, allowing different processing units to process different tasks. In some examples, fragment processing of different tiles may be performed concurrently at different processing units of the system. The processing units configured to perform each processing pass of a protected tile may or may not be the same processing unit, depending on the particular implementation.

Any suitable approach may be used for distributing tiles to processing units for fragment processing. In general, the GPU may have any kind of architecture and may utilise any scheme for distributing tiles to processing units. Fragment processing may be performed a single time for tiles which are not identified as being protected tiles (i.e. non-protected tiles).

The check unit 315 may be arranged to, for each fragment processing pass over one or more protected tiles, form one or more signatures which are characteristic of the fragment-processed output data. The controller 316 may be configured to cause the check unit to form such signatures by directing processed data to the check unit.

In some examples, the output of performing fragment processing in respect of a tile of a frame is written to one or more buffers. For example, the GPU 300 may maintain one or more of a colour buffer, a stencil buffer and a depth buffer. Such buffers may be held at any suitable data store of the GPU, for example at the cache 311, and/or at a processing unit 301, and/or the HSR unit 321. The fragment-processed data written to these buffers may be provided to the check unit 315 for formation of a signature over the data written. For example, the check unit may be arranged to form a signature over sets of one or more writes to the buffers during fragment processing. For example, each time one of the colour, depth or stencil buffers is written to, the controller 316 may cause that write to be passed to the check unit 315 for the check unit to generate a signature in respect of that write. One or more writes could be batched together for submission to the check unit with the check unit being configured to generate a signature over the writes of the batch.

The signatures formed in respect of the fragment processing of one or more protected tiles of a frame may be accumulated at a data store accessible to the graphics processing device - e.g. at cache 311. Signatures may be stored for subsequent use - e.g. for comparison with a signature formed in respect of a subsequent fragment processing pass of the same protected tile. Signatures may be associated at the data store with information representing the protected tile to which the signature relates (e.g. an identifier or coordinate of the tile) and the buffer to which the signature relates (e.g. which of the colour, stencil and depth buffers the write was directed to in respect of which the signature was formed). Since the content of the buffers written to during fragment processing are representative of the fragment processing performed at the graphics processing device, the total set of signatures formed over the writes to the buffers made during fragment processing of the protected tiles of a frame is representative of the complete fragment-processed output of the graphics processing device in respect of protected tiles of the frame. When signatures are available for the protected tiles of a frame, the controller 316 may be configured to perform a comparison between pairs of corresponding signatures and, if any of the signatures do not match, raise a fault in respect of the frame as a whole. The controller may be configured to wait for one or more signatures formed in respect of the second fragment processing pass before performing a comparison between corresponding signatures. In some examples, the controller may be configured to wait for all signatures formed in respect of the second fragment processing pass before performing a comparison between corresponding signatures.

The controller 316 may be configured to combine signatures relating to the fragment-processed data in respect of a protected tile, a group of protected tiles, or all of the protected tiles of the frame being rendered. Combining signatures may comprise: a simple aggregation of signatures, a signature formed at the check unit over two or more signatures to be aggregated, or any other suitable combination of signatures.

The controller 316 is configured to check at 413 whether the signatures (or the accumulation of signatures) match those which were formed in respect of different fragment processing passes of the same set of one or more protected tiles. Checking the output of fragment processing performed in respect of protected tiles enables faults that occur during fragment processing to be captured and can help the GPU to achieve a high safety level.

The output of a fragment processing phase may comprise one or more rendered tiles suitable for writing to a frame buffer, potentially subject to one or more further processing steps (e.g. stitching and/or blending tiles together to create a seamless output frame). The rendered tiles may be written to memory 306 (e.g. to a frame buffer). In the example that GPU 300 is configured to render instrument cluster 200, completed rendered tiles may be written to the physical display at which the instrument cluster is provided.

In some systems, for each tile to be written out from the fragment processing phase, a signature is generated to represent the data being written out in respect of that tile. The data for the tile may be written out to a buffer (e.g. a frame buffer), and may overwrite data previously stored in that buffer. The signature of the data being written out can be compared to a signature of the data in the buffer which is due to be overwritten by the data of the current tile. If the signatures match then there is no need to write out the new data. In other words, the data for a tile does not need to be written out if it is going to overwrite identical data. This is useful in terms of reducing memory bandwidth (i.e. reducing the amount of data transferred to memory), e.g. when a tile of a frame is the same as the corresponding tile of a previous frame, e.g. when a video sequence includes static images over a sequence of frames. These signatures could be used as (or as part of) the signatures 704 and 706 which are used to check for errors in protected tiles.

It can be advantageous to configure the graphics processing device to form a signature for each rendered tile generated by fragment processing, including the unprotected tiles. For example, the controller 316 could be configured to direct the fragment-processed output in respect of unprotected tiles to the check unit so as to cause one or more signatures to be formed for the rendered output of unprotected tiles. This enables the signatures of both the protected and unprotected tiles (i.e. all tiles) of the current frame to be compared with the signatures of the corresponding tiles of a previous frame. As a result the memory bandwidth may be further reduced by also avoiding writing out tiles to memory which are identical to the corresponding tile of the previous frame. Furthermore, the same signature generation and comparison processes may be used for both purposes (i.e. both (i) checking that protected tiles are error-free, and (ii) comparing tiles to corresponding previous tiles).

A graphics processing system configured in accordance with the principles described herein is arranged to identify and render protected tiles so as to meet a predefined safety level in respect of the processing performed for those tiles. For example, the graphics processing system may be certified to meet the ASIL B standard of ISO 26262 in respect of the rendering of protected tiles.

Graphics processing systems configured in accordance with examples described herein may have one or more advantages over conventional systems (such as GPUs in a dual lockstep configuration) which perform protected rendering by simply repeating the rendering of an entire frame.

Firstly, by repeating fragment processing only of those tiles that include safety critical elements, the system can offer substantially improved performance over systems that must repeat fragment processing over an entire frame in order to protect safety critical elements of the scene to be rendered.

Secondly, the system may offer flexibility over existing systems because, depending on the scene submitted for rendering, the system may perform protected fragment processing of some, all or none of the tiles. This allows application developers to protect only the safety critical parts of a scene to be rendered and make efficiency savings by not protecting parts of a scene which are not safety critical.

Thirdly, whilst protected fragment processing is performed on a per-tile basis, the geometry phase for a frame as a whole may be protected which can ensure that errors occurring in geometry calculations relating to elements present in non-protected tiles do not introduce errors into the rendering of protected tiles. Since the processing time consumed by fragment processing is typically substantially greater than the processing time consumed by geometry processing, sequentially repeating geometry processing in accordance with some of the examples described herein does not substantially increase the time taken to process a frame.

Fourthly, the fault reaction time of the system may be substantially reduced because faults during fragment processing can be detected at the completion of an individual tile rather than after a complete render of a frame. In some examples the fault reaction time of the system can be reduced further by checking for faults before fragment processing of a tile is complete (e.g. by checking signatures generated over one or more buffer writes performed during fragment processing).

Fifthly, because the present system may allow protected rendering to be performed with fewer fragment processing operations, the power consumption of a GPU configured in accordance with the principles described herein may be lower than that of conventional protected GPUs.

Sixthly, an application developer may enable protected rendering of safety critical parts of a scene without being required to make significant changes to their application (e.g. a software or firmware process which submits scene geometry to a GPU for rendering). In some examples, a process may merely set a flag or other identifier in respect of a draw call to the GPU (e.g. by means of an API cooperating with a driver for the GPU) to indicate that the geometry to which the draw call relates is safety critical and is to be rendered on the protected path. This avoids the need to handle the protected rendering in an application itself - e.g. by submitting draw calls twice and/or causing different parts of a scene to be separately rendered then subsequently combined at a frame buffer before being written to a display.

In architectures which include a check unit, no modification of the graphics processing device hardware may be necessary in order to achieve the efficiency advantages of performing redundant processing of the protected tiles but not unprotected tiles. For example, the approaches described herein may be implemented at a graphics processing system by providing an updated driver and firmware for the graphics processing device, the firmware comprising the controller 316. This enables existing graphics processing devices (which previously did not have the ability to perform rendering in safety-critical applications) to be used to perform rendering in safety-critical applications.

The graphics processing system of Figure 3 and the data processing system of Figure 5 are shown as comprising a number of functional blocks. This is schematic only and is not intended to define a strict division between different logic elements of such entities. Each functional block may be provided in any suitable manner. It is to be understood that intermediate values described herein as being formed by graphics processing systems need not be physically generated by the graphics processing systems at any point and may merely represent logical values which conveniently describe the processing performed by a graphics processing system between its input and output.

A graphics processing device described herein may be embodied in hardware on one or more integrated circuits. The graphics processing systems described herein may be configured to perform any of the methods described herein.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

A processor, computer, or computer system may be any kind of device, machine or dedicated circuit, or collection or portion thereof, with processing capability such that it can execute instructions. A processor may be any kind of general purpose or dedicated processor, such as a CPU, GPU, vector processor, tensor processor, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed in an integrated circuit manufacturing system configures the system to manufacture a graphics processing unit configured to perform any of the methods described herein, or to manufacture a graphics processing unit comprising any apparatus described herein. An integrated circuit definition dataset may be, for example, an integrated circuit description.

There may be provided a method of manufacturing, at an integrated circuit manufacturing system, a graphics processing unit as described herein. There may be provided an integrated circuit definition dataset that, when processed in an integrated circuit manufacturing system, causes the method of manufacturing a graphics processing unit to be performed.

An integrated circuit definition dataset may be in the form of computer code, for example as a netlist, code for configuring a programmable chip, as a hardware description language defining an integrated circuit at any level, including as register transfer level (RTL) code, as high-level circuit representations such as Verilog or VHDL, and as low-level circuit representations such as OASIS (RTM) and GDSII. Higher level representations which logically define an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing unit will now be described with respect to Figure 8.

Figure 8 shows an example of an integrated circuit (IC) manufacturing system 1002 which is configured to manufacture a graphics processing unit as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a graphics processing unit as described in any of the examples herein), process the IC definition dataset, and generate an IC according to the IC definition dataset (e.g. which embodies a graphics processing unit as described in any of the examples herein). The processing of the IC definition dataset configures the IC manufacturing system 1002 to manufacture an integrated circuit embodying a graphics processing unit as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 8 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 8, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A graphics processing system configured to use a rendering space which is subdivided into a plurality of tiles (201) to render a scene that includes safety-critical elements of geometry (206), the graphics processing system being configured to:
receive elements of geometry of the scene to be rendered (401), one or more of the elements of geometry being a safety-critical element of geometry;
process elements of geometry, in a geometry processing phase (402), so as to form, for each tile of the rendering space, a respective tile list indicating the elements of geometry included in that tile; and
for each of a plurality of the tiles, process elements of geometry in the tile, in a fragment processing phase (409, 410), so as to generate a respective fragment-processed output;
wherein the graphics processing system comprises a controller (316) configured to:
cause a set of one or more safety-critical elements of geometry to be processed in the geometry processing phase (402);
identify as protected tiles (405) one or more tiles for which the corresponding one or more tile lists are modified due to processing the set of one or more safety-critical elements of geometry in the geometry processing phase (404);
cause each of the protected tiles to be processed first and second times in the fragment processing phase (412) so as to, respectively, generate first and second fragment-processed outputs; and
raise a fault signal if the first and second fragment-processed outputs of a protected tile do not match (414).

2. A graphics processing system as claimed in claim 1, wherein the controller is configured to cause one or more tiles which are not identified as protected tiles to be processed a single time in the fragment processing phase (409).

3. A graphics processing system as claimed in claim 1 or 2, further comprising a check unit (315) operable to form a signature characteristic of a fragment-processed output, wherein the controller is configured to:
cause the check unit to form first and second signatures for the first and second fragment-processed outputs of a protected tile (411), respectively; and
compare the first and second signatures so as to determine whether the first and second fragment-processed outputs of the protected tile match (413).

4. A graphics processing system as claimed in claim 3, wherein the controller is configured to cause the check unit to form the first signature in respect of one or more first fragment-processed outputs and to form the second signature in respect of one or more second fragment-processed outputs.

5. A graphics processing system as claimed in claim 3 or 4, wherein the first and second signatures are each accumulated over a plurality of fragment-processed outputs directed to the check unit by the controller.

6. A graphics processing system as claimed in any preceding claim, wherein each first and second fragment-processed output represents a write to one or more buffers at a data store.

7. A graphics processing system as claimed in any preceding claim, wherein the controller is configured to determine which of the tile lists are modified due to processing the set of one or more safety-critical elements of geometry in the geometry processing phase by comparing the tile lists before and after processing the set of one or more safety-critical elements of geometry in the geometry processing phase.

8. A graphics processing system as claimed in any preceding claim, wherein the graphics processing system is configured to maintain state information for each of the tile lists and the controller is configured to compare the state information so as to determine which of the tile lists are modified due to processing the set of one or more safety-critical elements of geometry in the geometry processing phase.

9. A graphics processing system as claimed in any preceding claim, wherein the controller is configured to prevent the graphics processing system from releasing memory allocated to the protected tiles during fragment processing for the first time so as to maintain the protected tiles in memory for fragment processing for the second time.

10. A graphics processing system as claimed in any preceding claim, wherein the controller is configured to cause the graphics processing system to process elements of geometry in the geometry processing phase first and second times for the scene to be rendered (406) so as to, respectively, generate first and second geometry-processed outputs, and to compare the first and second geometry-processed outputs (407) and raise a fault signal (408) if the first and second geometry-processed outputs do not match.

11. A graphics processing system as claimed in claim 10, wherein the controller is configured to direct geometry-processed outputs to a check unit, wherein the check unit is configured to form one or more first geometry signatures which are characteristic of the first geometry-processed output, and to form one or more second geometry signatures which are characteristic of the second geometry-processed output, the controller being configured to perform the comparison of the first and second geometry-processed outputs by comparing the respective first and second geometry signatures (407).

12. A graphics processing system as claimed in any preceding claim, wherein each fragment-processed output corresponds to a single protected tile such that the fault signal identifies which protected tile caused the fault, and the controller is configured to cause that protected tile to be resubmitted for fragment processing at the graphics processing system.

13. A graphics processing system as claimed in any preceding claim, wherein the graphics processing system is configured to maintain signatures formed in respect of the tiles of one or more previous renders, and the graphics processing system is configured to, if the first and/or second signatures formed for a protected tile match a signature of the corresponding tile of the one or more previous frames, not write out the fragment-processed output for that protected tile to a memory accessible over a data bus and instead use the fragment-processed output of that previous frame as the rendered output of the protected tile.

14. A method of performing tile-based rendering of a scene that includes safety-critical elements of geometry (206) using a rendering space which is subdivided into a plurality of tiles (201), the method comprising:
receiving elements of geometry of the scene to be rendered (401), one or more of the elements of geometry being a safety-critical element of geometry;
processing elements of geometry in a geometry processing phase (402) so as to form, for each tile of the rendering space, a respective tile list indicating the elements of geometry included in that tile, wherein a set of one or more safety-critical elements of geometry are processed in the geometry processing phase;
identifying as protected tiles one or more tiles for which the corresponding one or more tile lists are modified due to processing the set of one or more safety-critical elements of geometry in the geometry processing phase;
for each of a plurality of the tiles, processing elements of geometry in the tile in a fragment processing phase (409, 410) so as to generate a respective fragment-processed output, wherein each of the protected tiles is processed first and second times in the fragment processing phase (412) so as to, respectively, generate first and second fragment-processed outputs; and
raising a fault signal if the first and second fragment-processed outputs of a protected tile do not match (414).

15. Computer program code for performing a method as claimed in claim 14.

## Patentansprüche

1. Grafikverarbeitungssystem, das zur Verwendung eines Wiedergaberaums konfiguriert ist, der zur Wiedergabe einer Szene, die sicherheitskritische Geometrieelemente (206) enthält, in eine Vielzahl von Kacheln (201) unterteilt ist, wobei das Grafikverarbeitungssystem konfiguriert ist zum:
Empfangen von Geometrieelementen der wiederzugebenden Szene (401), wobei eines oder mehrere der Geometrieelemente ein sicherheitskritisches Geometrieelement sind;
Verarbeiten von Geometrieelementen in einer Geometrieverarbeitungsphase (402), um für jede Kachel des Wiedergaberaums eine jeweilige Kachelliste zu bilden, die die in dieser Kachel enthaltenen Geometrieelemente angibt; und
Verarbeiten, für jede aus einer Vielzahl von Kacheln, von Geometrieelementen in der Kachel, in einer Fragmentverarbeitungsphase (409, 410) zum Erzeugen einer jeweiligen fragmentverarbeiteten Ausgabe;
wobei das Grafikverarbeitungssystem eine Steuerung (316) umfasst, konfiguriert zum:
Veranlassen der Verarbeitung eines Satzes von einem oder mehreren sicherheitskritischen Geometrieelementen in der Geometrieverarbeitungsphase (402);
Identifizieren einer oder mehrerer Kacheln, für die die entsprechenden eine oder mehreren Kachellisten aufgrund der Verarbeitung des Satzes von einem oder mehreren sicherheitskritischen Geometrieelementen in der Geometrieverarbeitungsphase (404) geändert werden, als geschützte Kacheln (405);
Veranlassen der ersten und zweiten Verarbeitung jeder der geschützten Kacheln in der Fragmentverarbeitungsphase (412) zum Erzeugen erster bzw. zweiter fragmentverarbeiteter Ausgaben; und
Auslösen eines Fehlersignals, wenn die ersten und zweiten fragmentverarbeiteten Ausgaben einer geschützten Kachel nicht übereinstimmen (414).

2. Grafikverarbeitungssystem nach Anspruch 1, wobei die Steuerung zum Veranlassen einer einmaligen Verarbeitung einer oder mehrerer Kacheln, die nicht als geschützte Kacheln identifiziert sind, in der Fragmentverarbeitungsphase (409) konfiguriert ist.

3. Grafikverarbeitungssystem nach Anspruch 1 oder 2, ferner umfassend eine Prüfeinheit (315), die zum Bilden eines Signaturmerkmals einer fragmentverarbeiteten Ausgabe betreibbar ist, wobei die Steuerung konfiguriert ist zum:
Veranlassen der Prüfeinheit zum Bilden einer ersten und zweiten Signatur für die erste bzw. zweite fragmentverarbeitete Ausgabe einer geschützten Kachel (411); und
Vergleichen der ersten und zweiten Signaturen zum Ermitteln, ob die ersten und zweiten fragmentverarbeiteten Ausgaben der geschützten Kachel übereinstimmen (413).

4. Grafikverarbeitungssystem nach Anspruch 3, wobei die Steuerung konfiguriert ist, die Prüfeinheit zum Bilden der ersten Signatur in Bezug auf eine oder mehrere erste fragmentverarbeitete Ausgaben und zum Bilden der zweiten Signatur in Bezug auf eine oder mehrere zweite fragmentverarbeitete Ausgaben zu veranlassen.

5. Grafikverarbeitungssystem nach Anspruch 3 oder 4, wobei die erste und die zweite Signatur jeweils über eine Vielzahl von fragmentverarbeiteten Ausgaben akkumuliert werden, die von der Steuerung an die Prüfeinheit geleitet werden.

6. Grafikverarbeitungssystem nach einem der vorhergehenden Ansprüche, wobei jede erste und zweite fragmentverarbeitete Ausgabe ein Schreiben in einen oder mehrere Zwischenspeicher in einem Datenspeicher darstellt.

7. Grafikverarbeitungssystem nach einem der vorhergehenden Ansprüche, wobei die Steuerung zum Ermitteln, durch Vergleichen der Kachellisten vor und nach der Verarbeitung des Satzes von einem oder mehreren sicherheitskritischen Geometrieelementen in der Geometrieverarbeitungsphase, konfiguriert ist, welche der Kachellisten aufgrund der Verarbeitung des Satzes von einem oder mehreren sicherheitskritischen Geometrieelementen in der Geometrieverarbeitungsphase modifiziert werden.

8. Grafikverarbeitungssystem nach einem der vorhergehenden Ansprüche, wobei das Grafikverarbeitungssystem zum Halten von Zustandsinformationen für jede der Kachellisten konfiguriert ist und die Steuerung zum Vergleichen der Zustandsinformationen zum Ermitteln konfiguriert ist, welche der Kachellisten aufgrund der Verarbeitung des Satzes von einem oder mehreren sicherheitskritischen Geometrieelementen in der Geometrieverarbeitungsphase modifiziert werden.

9. Grafikverarbeitungssystem nach einem der vorhergehenden Ansprüche, wobei die Steuerung konfiguriert ist, das Grafikverarbeitungssystem an der Freigabe von Speicher zu hindern, der den geschützten Kacheln während der ersten Fragmentverarbeitung zugeordnet ist, um die geschützten Kacheln im Speicher für die zweite Fragmentverarbeitung zu halten.

10. Grafikverarbeitungssystem nach einem der vorhergehenden Ansprüche, wobei die Steuerung zum Veranlassen des Grafikverarbeitungssystems zum ersten und zweiten Verarbeiten von Geometrieelementen in der Geometrieverarbeitungsphase für die wiederzugebende Szene (406) zum Erzeugen von ersten bzw. zweiten geometrieverarbeiteten Ausgaben und zum Vergleichen der ersten und zweiten geometrieverarbeiteten Ausgaben (407) und zum Auslösen eines Fehlersignals (408), wenn die ersten und zweiten geometrieverarbeiteten Ausgaben nicht übereinstimmen, konfiguriert ist.

11. Grafikverarbeitungssystem nach Anspruch 10, wobei die Steuerung zum Leiten von geometrieverarbeiteten Ausgaben an eine Prüfeinheit konfiguriert ist, wobei die Prüfeinheit zum Bilden einer oder mehrerer erster Geometriesignaturen, die für die erste geometrieverarbeitete Ausgabe charakteristisch sind, und zum Bilden einer oder mehrerer zweiter Geometriesignaturen, die für die zweite geometrieverarbeitete Ausgabe charakteristisch sind, konfiguriert ist, wobei die Steuerung zum Durchführen des Vergleichs der ersten und zweiten geometrieverarbeiteten Ausgaben durch Vergleichen der jeweiligen ersten und zweiten Geometriesignaturen (407) konfiguriert ist.

12. Grafikverarbeitungssystem nach einem der vorhergehenden Ansprüche, wobei jede fragmentverarbeitete Ausgabe einer einzelnen geschützten Kachel entspricht, sodass das Fehlersignal identifiziert, welche geschützte Kachel den Fehler verursacht hat, und die Steuerung zum Veranlassen, dass diese geschützte Kachel erneut zur Fragmentverarbeitung an das Grafikverarbeitungssystem übermittelt wird, konfiguriert ist.

13. Grafikverarbeitungssystem nach einem der vorhergehenden Ansprüche, wobei das Grafikverarbeitungssystem zum Halten von in Bezug auf die Kacheln einer oder mehrerer vorheriger Wiedergaben gebildeten Signaturen konfiguriert ist, und das Grafikverarbeitungssystem konfiguriert ist, um, wenn die für eine geschützte Kachel gebildeten ersten und/oder zweiten Signaturen mit einer Signatur der entsprechenden Kachel des einen oder der mehreren vorhergehenden Einzelbildes übereinstimmen, die fragmentverarbeitete Ausgabe für diese geschützte Kachel nicht in einen über einen Datenbus zugänglichen Speicher zu schreiben und stattdessen die fragmentverarbeitete Ausgabe dieses vorhergehenden Einzelbildes als die wiedergegebene Ausgabe der geschützten Kachel zu verwenden.

14. Verfahren zur Durchführung einer kachelbasierten Wiedergabe einer sicherheitskritische Geometrieelemente (206) enthaltenden Szene unter Verwendung eines in eine Vielzahl von Kacheln (201) unterteilten Wiedergaberaums, das Verfahren umfassend:
Empfangen von Geometrieelementen der wiederzugebenden Szene (401), wobei eines oder mehrere der Geometrieelemente ein sicherheitskritisches Geometrieelement sind;
Verarbeiten von Geometrieelementen in einer Geometrieverarbeitungsphase (402), um für jede Kachel des Wiedergaberaums eine jeweilige Kachelliste zu bilden, die die in dieser Kachel enthaltenen Geometrieelemente angibt, wobei ein Satz von einem oder mehreren sicherheitskritischen Geometrieelementen in der Geometrieverarbeitungsphase verarbeitet wird;
Identifizieren einer oder mehrerer Kacheln, für die die entsprechenden eine oder mehrere Kachellisten aufgrund der Verarbeitung des Satzes von einem oder mehreren sicherheitskritischen Geometrieelementen in der Geometrieverarbeitungsphase geändert werden, als geschützte Kacheln;
Verarbeiten von Geometrieelementen in der Kachel in einer Fragmentverarbeitungsphase (409, 410) für jede aus einer Vielzahl von Kacheln zum Erzeugen einer jeweiligen fragmentverarbeiteten Ausgabe, wobei jede der geschützten Kacheln ein erstes und ein zweites Mal in der Fragmentverarbeitungsphase (412) verarbeitet wird, um eine erste bzw. eine zweite fragmentverarbeitete Ausgabe zu erzeugen; und
Auslösen eines Fehlersignals, wenn die erste und zweite fragmentverarbeitete Ausgabe einer geschützten Kachel nicht übereinstimmen (414).

15. Computerprogrammcode zur Durchführung eines Verfahrens nach Anspruch 14.

## Revendications

1. Système de traitement graphique configuré pour utiliser un espace de rendu qui est subdivisé en une pluralité de pavés (201) pour rendre une scène qui comporte des éléments de géométrie essentiels pour la sécurité (206), le système de traitement graphique étant configuré pour :
recevoir des éléments de géométrie de la scène à rendre (401), un ou plusieurs des éléments de géométrie étant un élément de géométrie essentiel pour la sécurité ;
traiter des éléments de géométrie, dans une phase de traitement de géométrie (402), de manière à former, pour chaque pavé de l'espace de rendu, une liste de pavés respective indiquant les éléments de géométrie inclus dans ce pavé ; et
pour chacun d'une pluralité de pavés, traiter des éléments de géométrie dans le pavé, dans une phase de traitement en fragment (409, 410), de manière à générer une sortie traitée en fragment respective ;
dans lequel le système de traitement graphique comprend un dispositif de commande (316) configuré pour :
amener un ensemble d'un ou de plusieurs éléments de géométrie essentiels pour la sécurité à être traités dans la phase de traitement de géométrie (402) ;
identifier en tant que pavés protégés (405) un ou plusieurs pavés pour lesquels les une ou plusieurs listes de pavés correspondantes sont modifiées en raison du traitement de l'ensemble d'un ou de plusieurs éléments de géométrie essentiels pour la sécurité dans la phase de traitement de géométrie (404) ;
amener chacun des pavés protégés à être traité des première et deuxième fois dans la phase de traitement en fragment (412) de manière à générer respectivement des première et deuxième sorties traitées en fragment ; et
déclencher un signal de défaut si les première et deuxième sorties traitées en fragment d'un pavé protégé ne concordent pas (414) .

2. Système de traitement graphique selon la revendication 1, dans lequel le dispositif de commande est configuré pour amener un ou plusieurs pavés qui ne sont pas identifiés comme des pavés protégés à être traités une seule fois dans la phase de traitement en fragment (409).

3. Système de traitement graphique selon la revendication 1 ou 2, comprenant en outre une unité de vérification (315) capable de fonctionner pour former une signature caractéristique d'une sortie traitée en fragment, dans lequel le dispositif de commande est configuré pour :
amener l'unité de vérification à former des première et deuxième signatures pour les première et deuxième sorties traitées en fragment d'un pavé protégé (411), respectivement ; et
comparer les première et deuxième signatures de manière à déterminer si les première et deuxième sorties traitées en fragment du pavé protégé concordent (413).

4. Système de traitement graphique selon la revendication 3, dans lequel le dispositif de commande est configuré pour amener l'unité de vérification à former la première signature en rapport avec une ou plusieurs premières sorties traitées en fragment et former la deuxième signature en rapport avec une ou plusieurs deuxièmes sorties traitées en fragment.

5. Système de traitement graphique selon la revendication 3 ou 4, dans lequel les première et deuxième signatures sont chacune accumulées sur une pluralité de sorties traitées en fragments adressées à l'unité de vérification par le dispositif de commande.

6. Système de traitement graphique selon l'une quelconque des revendications précédentes, dans lequel chaque première et deuxième sortie traitée en fragment représente une écriture dans un ou plusieurs tampons au niveau d'un magasin de données.

7. Système de traitement graphique selon l'une quelconque des revendications précédentes, dans lequel le dispositif de commande est configuré pour déterminer les listes de pavés qui sont modifiées en raison du traitement de l'ensemble d'un ou de plusieurs éléments essentiels pour la sécurité de géométrie dans la phase de traitement de géométrie par comparaison des listes de pavés avant et après traitement de l'ensemble d'un ou de plusieurs éléments essentiels pour la sécurité de géométrie dans la phase de traitement de géométrie.

8. Système de traitement graphique selon l'une quelconque des revendications précédentes, dans lequel le système de traitement graphique est configuré pour conserver des informations d'état pour chacune des listes de pavés et le dispositif de commande est configuré pour comparer les informations d'état de manière à déterminer les listes de pavés qui sont modifiées en raison du traitement de l'ensemble d'un ou de plusieurs éléments essentiels pour la sécurité de géométrie dans la phase de traitement de géométrie.

9. Système de traitement graphique selon l'une quelconque des revendications précédentes, dans lequel le dispositif de commande est configuré pour empêcher le système de traitement graphique de libérer de la mémoire attribuée aux pavés protégés pendant le traitement en fragments pour la première fois de manière à conserver les pavés protégés en mémoire pour le traitement en fragments pour la deuxième fois.

10. Système de traitement graphique selon l'une quelconque des revendications précédentes, dans lequel le dispositif de commande est configuré pour amener le système de traitement graphique à traiter des éléments de géométrie dans la phase de traitement de géométrie des première et deuxième fois pour la scène à rendre (406) de manière à générer respectivement des première et deuxième sorties traitées en géométrie, et comparer les première et deuxième sorties traitées en géométrie (407) et déclencher un signal de défaut (408) si les première et deuxième sorties traitées en géométrie ne concordent pas.

11. Système de traitement graphique selon la revendication 10, dans lequel le dispositif de commande est configuré pour adresser des sorties traitées en géométrie à une unité de vérification, dans lequel l'unité de vérification est configurée pour former une ou plusieurs premières signatures de géométrie qui sont caractéristiques de la première sortie traitée en géométrie, et former une ou plusieurs deuxièmes signatures de géométrie qui sont caractéristiques de la deuxième sortie traitée en géométrie, le dispositif de commande étant configuré pour réaliser la comparaison des première et deuxième sorties traitées en géométrie par comparaison des première et deuxième signatures de géométrie respectives (407).

12. Système de traitement graphique selon l'une quelconque des revendications précédentes, dans lequel chaque sortie traitée en fragment correspond à un seul pavé protégé de sorte que le signal de défaut identifie le pavé protégé qui a provoqué le défaut, et le dispositif de commande est configuré pour amener ce pavé protégé à être soumis à nouveau à un traitement en fragments au niveau du système de traitement graphique.

13. Système de traitement graphique selon l'une quelconque des revendications précédentes, dans lequel le système de traitement graphique est configuré pour conserver des signatures formées en rapport avec les pavés d'un ou de plusieurs rendus précédents, et le système de traitement graphique est configuré pour, si les première et/ou deuxième signatures formées pour un pavé protégé concordent avec une signature du pavé correspondant des une ou plusieurs trames précédentes, ne pas écrire la sortie traitée en fragment pour ce pavé protégé dans une mémoire accessible sur un bus de données et plutôt utiliser la sortie traitée en fragment de cette trame précédente en tant que sortie rendue du pavé protégé.

14. Procédé de réalisation d'un rendu basé sur des pavés d'une scène qui comporte des éléments de géométrie essentiels pour la sécurité (206) à l'aide d'un espace de rendu qui est subdivisé en une pluralité de pavés (201), le procédé comprenant :
la réception d'éléments de géométrie de la scène à rendre (401), un ou plusieurs des éléments de géométrie étant un élément de géométrie essentiel pour la sécurité ;
le traitement d'éléments de géométrie, dans une phase de traitement de géométrie (402) de manière à former, pour chaque pavé de l'espace de rendu, une liste de pavés respective indiquant les éléments de géométrie inclus dans ce pavé, dans lequel un ensemble d'un ou de plusieurs éléments de géométrie essentiels pour la sécurité sont traités dans la phase de traitement de géométrie ;
l'identification en tant que pavés protégés d'un ou de plusieurs pavés pour lesquels les une ou plusieurs listes de pavés correspondantes sont modifiées en raison du traitement de l'ensemble d'un ou de plusieurs éléments de géométrie essentiels pour la sécurité dans la phase de traitement de géométrie ;
pour chacune d'une pluralité de pavés, le traitement d'éléments de géométrie dans le pavé dans une phase de traitement en fragment (409, 410) de manière à générer une sortie traitée en fragment respective, dans lequel chacun des pavés protégés est traité des première et deuxième fois dans la phase de traitement en fragment (412) de manière à, respectivement, générer des première et deuxième sorties traitées en fragment ; et
le déclenchement d'un signal de défaut si les première et deuxième sorties traitées en fragment d'un pavé protégé ne concordent pas (414).

15. Code de programme informatique pour la réalisation d'un procédé tel que revendiqué dans la revendication 14.
